# EUROPEAN PATENT SPECIFICATION

(11) **EP 1 881 012 B1**
(45) Date of publication and mention of the grant of the patent: **02.04.2014**
(21) Application number: 06745761.4
(22) Date of filing: 27.04.2006
(51) Int. Cl.: C08F 4/649, C08F 4/659, C08F 110/06, C08F 210/06, C08F 4/02, C08F 4/6592

(54) **CATALYSTS FOR OLEFIN POLYMERIZATION, PROCESS FOR PRODUCTION OF THE CATALYSTS, AND METHOD FOR PRESERVATION THEREOF**
KATALYSATOREN FÜR DIE OLEFINPOLYMERISATION, VERFAHREN ZUR HERSTELLUNG DER KATALYSATOREN UND KONSERVIERUNGSVERFAHREN DAFÜR
CATALYSEURS DE POLYMERISATION DES OLEFINES ET PROCEDES DE PRODUCTION ET DE CONSERVATION DES CATALYSEURS

(30) Priority: 12.05.2005 JP 2005139444; 12.05.2005 JP 2005139445; 23.03.2006 JP 2006080750
(43) Date of publication of application: 23.01.2008
(73) Proprietor: Japan Polypropylene Corporation, Tokyo 108-0014 (JP)
(72) Inventor: SAGAE, Takehiro, Yokkaichi-shi, Mie 5100848 (JP)
(74) Representative: HOFFMANN EITLE
(86) International application number: PCT/JP2006/308833
(87) International publication number: WO 2006/120916

(56) References cited:
- EP-A1- 1 857 468
- EP-A2- 0 755 948
- JP-A- 03 234 714
- JP-A- 04 189 803
- JP-A- 09 255 711
- JP-A- 2002 060 411
- JP-A- 2004 051 676

## Description

### BACKGROUND OF THE INVENTION

### FIELD OF THE INVENTION

The present invention relates to a process for production of an olefin polymerization catalyst.

### DESCRIPTION OF THE PRIOR ART

Polyolefins produced by using a conventional solid catalyst component for olefin polymerization had a catalyst metal and a halogen compound left in the produced polymers, which badly impaired stability of the polymers. The catalyst residue, therefore, was removed by treating the polymers with alcohols or chelating agents and further adding a step such as washing treatment. Lately, however, a polymerization catalyst of high activity has reduced the compounds that are derived from the catalyst and left in a polymer, and thus a step for removing the catalyst residue has been omitted for the purpose of production-cost reduction. Further, from the standpoint of an environmental problem such as global warming, an energy-saving type production method for polyolefin resins that gives stable polymers blended with a small amount of an antioxidant or the like has been desired.

Although a production method using a high-activity olefin polymerization catalyst can dispense with a catalyst-removing step and thus is an energy-saving type, the polyolefin resin obtained by the method contains a small amount of catalyst residues and is therefore less stable and has a shorter product life compared with polyolefin resins removed catalysts, requiring a large amount of antioxidants. Consequently, obtained fine powders of polymers are blended with stabilizers represented by various antioxidants and have them uniformly dispersed by heating and melting in a granulator or the like and thus are molded to pellets that are easy to handle. These procedures have been attempted in search of long-time stability of polymers.

Melt-kneading a polymer with various stabilizers after polymerization, however, is not efficient because a large amount of energy is consumed. In some cases, a stabilizer of more amount than necessary must be added to cope with insufficient dispersion of the stabilizer. It is reported that a stabilizer can be uniformly dispersed by blending the stabilizer during or after polymerization in a polymerization method in which a granular polymer can be directly obtained and thus a granulating-kneading step can be omitted.

For example, with regard to the method for blending a stabilizer immediately after polymerization, a method of coating a polymer powder with a phosphorus-based antioxidant, a phenol-based antioxidant, thioether and a light stabilizer using paraffin wax as a sticking agent (see patent document 1, for example), a method of adding a stabilizer into liquid monomers after polymerization but before flashing the liquid monomers (see patent document 2, for example) and a method of blending by treating a granular polyolefin resin obtained by polymerization with steam and then scattering an antioxidant (see patent document 3, for example) are disclosed.

These methods for blending a stabilizer after polymerization, however, are difficult to perform uniform dispersion in polymers and require another step for adding.

With regard to the method for making a stabilizer or the like present in a polymerization system, for example, a method of polymerizing an α-olefin in the presence of a phosphorus-based antioxidant in polymerization using a Ziegler-Natta catalyst is disclosed, and it is shown that this method gives better stability than adding after polymerization and an extruder for blending an antioxidant can be omitted (see patent document 4, for example). It is also disclosed that use of a catalyst of a specific ether compound gives an excellent stabilizing effect and does not pose problems such as degradation of polymerization activity and coloring of resins when a phenol-based antioxidant is used during polymerization (see patent document 5, for example). Further, a method for producing an olefin polymer is proposed where polymerization is carried out on a transition metallocene catalyst by adding at least one of a phosphorus compound, a sterically-hindered amine, a sterically-hindered phenol and an acid scavenger (see patent document 6, for example).

These methods for adding a stabilizer to a polymerization system, however, may pose a problem such as contamination, deposition and clogging in a monomer recycle line caused by the stabilizer that may be entrained in unreacted monomers, while they have an advantage that the step for blending the stabilizer can be omitted. There is another problem that the stabilizer is not used effectively.

On the other hand, a production method for controlling the size and shape of granulated pellets to obtain pellets of a uniform shape using improved catalyst technologies is proposed, because particles obtained in polymerization are often so amorphous and finely grained that it is difficult to handle the polymer powder itself. For example, a method for producing polymer particles having a uniform shape and size distribution using a halogen-containing titanium catalyst component that is obtained by supporting the titanium compound on particles of an oxygen-containing magnesium compound granulated by spraying, is proposed (see patent document 7, for example).

This method, however, requires another step for blending a stabilizer because the polymer is not subjected to stabilizing treatment, although it gives polymer particles having a uniform shape and size distribution. It is difficult to disperse a stabilizer into the inside of a larger particle, which is thus more vulnerable to degradation compared with a smaller particle. Consequently, a method for effectively stabilizing a larger particle by uniformly dispersing a stabilizer into its inside is desired.
Patent document 1: JP-A-3-220248
Patent document 2: JP-A-6-179713
Patent document 3: JP-A-2003-231711
Patent document 4: JP-A-63-92613
Patent document 5: JP-A-5-271335
Patent document 6: JP-A-9-12621
Patent document 7: JP-A-61-23205

Conventional methods for polymerizing polyolefins where an antioxidant is blended by melt-kneading after polymerization for stabilization are inefficient due to consumption of a large amount of energy and require an antioxidant of more amount than necessary to cope with insufficient dispersion of the antioxidant. Considering these drawbacks of conventional technologies, an object of the present invention is to provide an olefin polymerization catalyst for producing a polyolefin resin of large particle size to which a small amount of an antioxidant is effectively added and which is easy to handle, that does not require a melt-kneading step to consume a large amount of energy or a substitute addition step therefor, a process for production of the olefin polymerization catalyst and a method for preservation thereof.

### SUMMARY OF THE INVENTION

After having intensively studied a way to solve such problems, the present inventor has found that an olefin polymerization catalyst containing at least one antioxidant that is prepolymerized can provide a polymer powder with good powder quality and also can provide effectively a polyolefin with stability using a small amount of the antioxidant when used in the production of a polyolefin resin, and does not necessarily require the antioxidant to be added in a melt-kneading step to consume a large amount of energy, and that the above olefin polymerization catalyst that is added with an organoaluminum compound or preserved in the coexistence of an organoaluminum compound is free from degradation of catalyst activity even after some time passing from production and can stably produce a highly stabilized polyolefin resin having good powder quality, and has completed the present invention.

According to the present invention, a process for production of an olefin polymerization catalyst comprising a prepolymerization in the presence of the following components [I] to [IV], is provided, as further defined in claim 1. Component [I]: a solid catalyst for olefin polymerization having a mean particle diameter of 10 to 200 µm Component [II]: an antioxidant for resins as defined further below Component [III]: an olefin Component [IV]: an organoaluminum compound.

According to the present invention, the component [II] comprises a phenol-based antioxidant and/or a phosphorus-based antioxidant.

According to one aspect of the present invention, the ratio of the component [III] to the component [I] is 0.01 to 100 based on mass.

According to another aspect of the present invention, the component [I] comprises a metallocene catalyst.

According to the present invention, the component [I] is obtained by contacting the following component [A], component [B] and component [C], is provided.
Component [A]: a transition metal compound of Groups 4 to 6 of the Periodic Table
Component [B]: a phyllosilicate having ion exchange ability
Component [C]: an organoaluminum compound

According to the present invention, the component [II] is added in a step for prepolymerization conducted by contacting the component [I] and the component [III].

According to the present invention, the component [I] contains the following component [A'] and component [B']:
Component [A']: a component obtained by contacting the component [A] and the component [C]
Component [B']: a component obtained by contacting the component [B] and the component [C] followed by washing

According to another aspect of the present invention, the component [II] is added immediately after prepolymerization conducted by contacting the component [I] and the component [III].

According to another aspect of the present invention, the component [IV] is added immediately after prepolymerization conducted by contacting the components [I] to [III].

According to another aspect of the present invention, the component [IV] is added at the same time as or next to the component [II] immediately after prepolymerization conducted by contacting the component [I] and the component [III].

A polyolefin resin having a large particle size, good powder quality and high stability can be obtained by using the olefin polymerization catalyst produced in the present invention that contains an antioxidant for resins in its prepolymerized catalyst. Since an antioxidant for resins is contained in the catalyst and thus uniformly dispersed in a polymer after polymerization, it can be expected to reduce an amount of various antioxidants and weatherability improving agents to be used for blending in a molding step. Further, since the polymer contains a stabilizer, a granulating step for introducing the stabilizer can be omitted, which can save energy for stabilization.

In addition, use of the olefin polymerization catalyst can provide an olefin polymerization catalyst with a long storage life and stably produce a polyolefin resin having a large particle size, good powder quality and high stability. Furthermore, conventional methods for polymerizing polyolefins where an antioxidant is blended by melt-kneading after polymerization for stabilization are inefficient due to consumption of a large amount of energy and require an antioxidant of more amount than necessary to cope with insufficient dispersion of the antioxidant. In view of these drawbacks of conventional technologies, the present invention can stably produce a polyolefin resin effectively added with a small amount of an antioxidant without requiring a melt-kneading step to consume a large amount of energy or a substitute addition step therefor.

### DETAILED DESCRIPTION OF THE INVENTION

An aspect of the present invention is a process for production of an olefin polymerization catalyst obtained by prepolymerization in the presence of the component [I]: a solid catalyst component for olefin polymerization having a mean particle diameter of 10 to 200 µm, the component [II]: an antioxidant for resins, the component [III]: an olefin, and the component [IV]: an organoaluminium compound.

Each component, an olefin polymerization catalyst, its production process, a method for preservation and the like will be described in detail hereinafter.
1. Components composing the olefin polymerization catalyst (1) Solid catalyst component [I] for olefin polymerization having a mean particle diameter of 10 to 200 µm

The solid catalyst component [I] for olefin polymerization to be used in the olefin polymerization catalyst of the present invention includes a metallocene catalyst composed of a transition metal supported by a known magnesium compound and silicon compound. It is necessary in the present invention to prepare a solid catalyst component so as to have a mean particle diameter of 10 to 200 µm, preferably 40 to 200 µm and more preferably 40 to 150 µm. The catalyst component having a mean particle diameter smaller than 10 µm gives a polymer of too small particles, which is difficult to be handled, and the catalyst component having a mean particle diameter larger than 200 µm gives a polymer of too large particles, which causes sedimentation and insufficient flow in the reaction system leading to formation and clogging of an agglomerate.

The carrier such as a magnesium compound and a silicon compound preferably has spherical and large particles.

The magnesium compound can be produced by spray-granulating from a suspension of an oxygen-containing magnesium compound of a mean particle diameter of 0.01 to 20 µm.

The magnesium compound of a mean particle diameter of 0.01 to 20 µm may be obtained by grinding large particles of a commercially available solid oxygen-containing magnesium compound. The above obtained magnesium compound is suspended in water or an organic solvent and sprayed in hot air to produce spherical particles of a particle diameter of 10 to 200 µm. The above spherical particles are preferably formed by spraying a suspension of a magnesium compound having a concentration of 1 to 60% by weight, preferably 5 to 40% by weight by a known technology and apparatus in hot air, using a spray nozzle or a high-speed disc rotating at a selected rotation speed. The temperature and pressure of the hot air and the temperature and feed rate of the suspension are selected so that the concentration of the solvent left in an oxygen-containing magnesium compound may be 10% by weight or less. The solvent to be used is hydrocarbons such as hexane, heptane and toluene, and alcohols such as methanol and ethanol, and generally, is preferably selected from low boiling point solvent for rapid drying.

The particle of the magnesium compound can be also obtained by cooling in an extremely short time an emulsion obtained by mixing an oxygen-containing magnesium compound and an alcohol in an inert hydrocarbon liquid followed by heating to the melting point and stirring violently. The obtained particle is dried and then partially dealcoholized by heating to 50 to 130°C. The partially dealcoholized particle is a spherical particle having a mean particle diameter of 40 to 200 µm, a specific surface area of 10 to 50 m²/g and a specific pore volume of 0.6 to 2 cm³/g (measured by a mercury penetration method). The dealcoholization is carried out so that the content of alcohol may be 2 moles or less, preferably 0.15 to 1.5 moles relative to 1 mol of the oxygen-containing magnesium compound.

The thus obtained oxygen-containing magnesium compound is used for preparing a catalyst after subjected to drying to reduce the amount of residual solvents as necessary. The method for preparing the catalyst includes a method of directly reacting the oxygen-containing magnesium compound with a titanium compound, a method of preliminarily treating the oxygen-containing magnesium compound with an electron donor, a halogenating agent or an organic metal compound in advance and then reacting with a titanium compound, a method of subjecting the oxygen-containing magnesium compound to reaction with an electron donor or a halogenating agent at the same time as the reaction with a titanium compound and a method of subjecting the oxygen-containing magnesium compound to reaction with at least one of an electron donor, a halogenating agent or an organic metal compound in an optional order after reacting with a titanium compound, while acting the titanium compound in an optional stage as necessary. Especially, a catalyst component of higher activity can be obtained by a method of subjecting the oxygen-containing magnesium compound to reaction with 0.1 to 6 moles, preferably 1 to 4 moles of an electron donor per 1 titanium atom fixed on a carrier after reaction with a titanium compound and then to reaction with about 0.5 to 5 moles of an organic metal compound per 1 mol of the electron donor and subjecting again to reaction with the titanium compound after washing as necessary.

The above metallocene catalyst composed of a transition metal includes an olefin polymerization catalyst containing a transition metal compound of Groups 4 to 6 of the Periodic Table having at least one conjugate five-membered-ring ligand. The catalyst is obtained by contacting the component [A] : a transition metal compound of Groups 4 to 6 of the Periodic Table with the component [B]: a solid component containing at least a phyllosilicate having ion exchange ability and with the component [C]: an organoaluminum compound.

In the description of the present invention, the expressions of "contain", "be composed of" and "be combined with" mean that a given compound can be used in combination with other compounds than its component as long as they do not impair the effect of the present invention.

Each component will be described in detail hereinafter.
Component [A]: a transition metal compound of Groups 4 to 6 of the Periodic Table

The component [A] transition metal compound of Groups 4 to 6 of the Periodic Table to be used in the present invention includes compounds represented by the following general formulae (1), (2), (3) and (4).

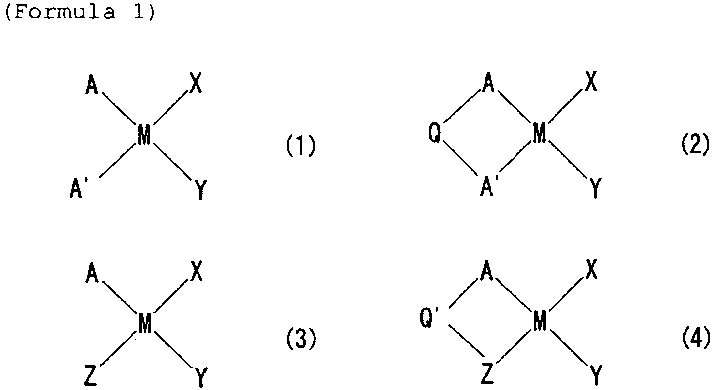

In the above general formulae (1), (2), (3) and (4), A and A' indicate each a conjugate five-membered-ring ligand that may have a substituent (A and A' may be the same or different in one compound) ; Q indicates a bonding group cross-linking two conjugate five-membered-ring ligands at an optional location; Z indicates a ligand containing a nitrogen atom, an oxygen atom, a silicon atom, a phosphorus atom or a sulfur atom; Q' indicates a bonding group cross-linking an optional location of a conjugate five-membered-ring ligand and Z; M indicates a metal atom selected from the atoms of Groups 4 to 6 of the Periodic Table; X and Y indicate each a hydrogen atom, a halogen atom, a hydrocarbon group, an alkoxy group, an amino group, a phosphorus-containing hydrocarbon group or a silicon-containing hydrocarbon group (X and X' may be the same or different in one compound).

A and A' include each a cyclopentadienyl group. The cyclopentadienyl group may be a group having 5 hydrogen atoms [C₅H₅-] and its derivative, that is, a group having some of its hydrogen atoms substituted with substituents.

The substituent is exemplified by a C₁₋₄₀, preferably C₁₋₃₀ hydrocarbon group. The hydrocarbon group may bond to the cyclopentadienyl group as a monovalent group, or when a plurality of hydrocarbon groups are present, two of them may bond to each other at the other end (ω-end) to form a ring along with part of the cyclopentadienyl group. The latter is exemplified by a group obtained by forming a condensed six-membered ring where two substituents bond to each other at the ω-ends and share two adjacent carbon atoms in the cyclopentadienyl group, that is, an indenyl group, a tetrahydroindenyl group and a fluorenyl group, and a group obtained by forming a condensed seven-membered ring, that is, an azulenyl group and a tetrahydroazulenyl group.

Preferable specific examples of the conjugate five-membered-ring ligand indicated by A and A' include a substituted or unsubstituted cyclopentadienyl group, an indenyl group, a fluorenyl group or an azulenyl group. Among these, a substituted or unsubstituted indenyl group or azulenyl group is particularly preferable.

A substituent on the cyclopentadienyl group includes the above C₁₋₄₀, preferably C₁₋₃₀ hydrocarbon group, a halogen atom group such as fluorine, chlorine and bromine, a C₁₋₁₂ alkoxy group and, for example, a silicon-containing hydrocarbon group indicated by -Si (R¹) (R²) (R³), a phosphorus-containing hydrocarbon group indicated by -P(R¹) (R²), or a boron-containing hydrocarbon group indicated by -B(R¹) (R²). In the case of a plurality of these substituents, each substituent may be the same or different. The above R¹, R² and R³ may be the same or different and indicate each a C₁₋₂₄, preferably C₁₋₁₈ alkyl group.

Q indicates a bonding group cross-linking two conjugate five-membered-ring ligands at an optional location; Q' indicates a bonding group cross-linking an optional location of a conjugate five-membered-ring ligand and a group indicated by Z.

Specific examples of Q and Q' include the following groups.
(a) alkylene groups such as methylene, ethylene, isopropylene, phenylmethylmethylene, diphenylmethylene and cyclohexylene;
(b) silylene groups such as dimethylsilylene, diethylsilylene, dipropylsilylene, diphenylsilylene, methylethylsilylene, methylphenylsilylene, methyl-t-butylsilylene, disilylene and tetramethyldisilylene;
(c) hydrocarbon groups containing germanium, phosphorus, nitrogen, boron or aluminum.

More specifically, groups indicated by (CH₃)₂Ge, (C₆H₅)₂Ge, (CH₃) P, (C₆H₅) P, (C₄H₉) N. (C₆H₅) N, (C₄H₉) B, (C₆H₅) B and (C₆H₅)Al(C₆H₅O)Al. Preferable groups are alkylene groups and silylene groups.

M indicates a transition metal atom selected from the atoms of Groups 4 to 6 of the Periodic Table, preferably a metal atom of Group 4 of the Periodic Table, specifically titanium, zirconium, hafnium and the like. Zirconium and hafnium are particularly preferable.

Z indicates a ligand containing a nitrogen atom, an oxygen atom, a silicon atom, a phosphorus atom or a sulfur atom; a hydrogen atom, a halogen atom or a hydrocarbon group. Preferable examples include specifically an oxygen atom, a sulfur atom, a C₁₋₂₀ preferably C₁₋₁₂ thioalkoxy group, a C₁₋₄₀ preferably C₁₋₁₈ silicon-containing hydrocarbon group, a C₁₋₄₀ preferably C₁₋₁₈ nitrogen-containing hydrocarbon group, a C₁₋₄₀ preferably C₁₋₁₈ phosphorus-containing hydrocarbon group, a hydrogen atom, chlorine, bromine and a C₁₋₂₀ hydrocarbon group.

X and Y indicate each hydrogen, a halogen atom, a C₁₋₂₀ preferably C₁₋₁₀ hydrocarbon group, a C₁₋₂₀ preferably C₁₋₁₀ alkoxy group, an amino group, a C₁₋₂₀ preferably C₁₋₁₂ phosphorus-containing hydrocarbon group such as a diphenylphosphino group, or a C₁₋₂₀ preferably C₁₋₁₂ silicon-containing hydrocarbon group such as a trimethylsilyl group and a bis(trimethylsilyl)methyl group. X and Y may be the same or different. Among these, a halogen atom, a C₁₋₁₀ hydrocarbon group and a C₁₋₁₂ amino group are particularly preferable.

The compounds represented by general formula (1) include, for example,
(1) bis(methylcyclopentadienyl)zirconium dichloride,
(2) bis(n-butylcyclopentadienyl)zirconium dichloride,
(3) bis(1,3-dimethylcyclopentadienyl)zirconium dichloride,
(4) bis(1-n-butyl-3-methylcyclopentadienyl)zirconium dichloride,
(5) bis(1-methyl-3-trifluoromethylcyclopentadienyl)zirconium dichloride,
(6) bis(1-methyl-3-trimethylsilylcyclopentadienyl)zirconium dichloride,
(7) bis(1-methyl-3-phenylcyclopentadienyl)zirconium dichloride,
(8) bis(indenyl)zirconium dichloride,
(9) bis(tetrahydroindenyl)zirconium dichloride and
(10) bis(2-methyl-tetrahydroindenyl)zirconium dichloride.

The compounds represented by general formula (2) include, for example,
(1)dimethylsilylenebis{1-(2-methyl-4-isopropyl-4H-azulenyl) }zirconium dichloride,
(2)dimethylsilylenebis{1-(2-methyl-4-phenyl-4H-azulenyl)}zi rconium dichloride,
(3)dimethylsilylenebis[1-{2-methyl-4-(4-fluorophenyl)-4H-az ulenyl}] zirconium dichloride,
(4)dimethylsilylenebis[1-{2-methyl-4-(2,6-dimethylphenyl)-4 H-azulenyl}]zirconium dichloride,
(5)dimethylsilylenebis{1-(2-methyl-4,6-diisopropyl-4H-azule nyl)}zirconium dichloride,
(6)diphenylsilylenebis{1-(2-methyl-4-phenyl-4H-azulenyl)}zi rconium dichloride,
(7)dimethylsilylenebis{1-(2-ethyl-4-phenyl-4H-azulenyl)}zir conium dichloride,
(8)ethylenebis{1-[2-methyl-4-(4-biphenylyl)-4H-azulenyl]}zi rconium dichloride,
(9)dimethylsilylenebis{1-[2-ethyl-4-(2-fluoro-4-biphenylyl) -4H-azulenyl]}zirconium dichloride,
(10)dimethylsilylenebis{1-[2-methyl-4-(2',6'-dimethyl-4-bip henylyl)-4H-azulenyl]}zirconium dichloride,
(11)dimethylsilylene{1-[2-methyl-4-(4-biphenylyl)-4H-azulen yl]}{1-[2-methyl-4-(4-biphenylyl)indenyl]}zirconium dichloride,
(12)dimethylsilylene{1-(2-ethyl-4-phenyl-4H-azulenyl)}{1-(2 -methyl-4,5-benzoindenyl)}zirconium dichloride,
(13)dimethylsilylenebis{1-(2-ethyl-4-phenyl-7-fluoro-4H-azu lenyl)}zirconium dichloride,
(14)dimethylsilylenebis{1-(2-ethyl-4-indolyl-4H-azulenyl)}z irconium dichloride,
(15)dimethylsilylenebis[1-{2-ethyl-4-(3,5-bistrifluoromethy lphenyl)-4H-azulenyl}]zirconium dichloride,
(16)dimethylsilylenebis{1-(2-methyl-4-phenyl-4H-azulenyl)}z irconium bis(trifluoromethanesulfonic acid),
(17)dimethylsilylenebis{1-(2-methyl-4-phenylindenyl)}zircon ium dichloride,
(18)dimethylsilylenebis{1-(2-methyl-4,5-benzoindenyl)}zirco nium dichloride,
(19)dimethylsilylenebis[1-{2-methyl-4-(1-naphthyl)indenyl}] zirconium dichloride,
(20)dimethylsilylenebis{1-(2-methyl-4,6-diisopropylindenyl) }zirconium dichloride,
(21)dimethylsilylenebis{1-(2-ethyl-4-phenylindenyl)}zirconi um dichloride,
(22)ethylene-1,2-bis{1-(2-methyl-4-phenylindenyl)}zirconium dichloride,
(23)ethylene-1,2-bis{1-(2-ethyl-4-phenylindenyl)}zirconium dichloride,
(24)isopropylidenebis{1-(2-methyl-4-phenylindenyl)}zirconiu m dichloride,
(25)ethylene-1,2-bis{1-(2-methyl-4-phenyl-4H-azulenyl)}zirc onium dichloride,
(26)isopropylidenebis{1-(2-methyl-4-phenyl-4H-azulenyl)}zir conium dichloride,
(27)dimethylgermilenebis{1-(2-methyl-4-phenylindenyl)}zirco nium dichloride,
(28)dimethylgermilenebis{1-(2-ethyl-4-phenylindenyl)}zircon ium dichloride,
(29)phenylphosphinobis{1-(2-ethyl-4-phenylindenyl)}zirconiu m dichloride,
(30)dimethylsilylenebis[3-(2-furyl)-2,5-dimethyl-cyclopenta dienyl]zirconium dichloride,
(31)dimethylsilylenebis[2-(2-furyl)-3,5-dimethyl-cyclopenta dienyl]zirconium dichloride,
(32)dimethylsilylenebis[2-(2-furyl)-indenyl]zirconium dichloride,
(33)dimethylsilylenebis[2-(2-(5-methyl)furyl)-4,5-dimethylcyclopentadienyl]zirconium dichloride,
(34)dimethylsilylenebis[2-(2-(2-(5-trimethylsilyl)furyl)-4, 5-dimethyl-cyclopentadienyl)zirconium dichloride,
(35)dimethylsilylenebis[2-(2-thienyl)-indenyl]zirconium dichloride,
(36)dimethylsilylene[2-(2-(5-methyl)furyl)-4-phenylindenyl] [2-methyl-4-phenylindenyl]zirconium dichloride,
(37)dimethylsilylenebis(2,3,5-trimethylcyclopentadienyl)zir conium dichloride,
(38)dimethylsilylenebis(2,3-dimethyl-5-ethylcyclopentadieny l)zirconium dichloride and
(39)dimethylsilylenebis(2,5-dimethyl-3-phenylcyclopentadien yl)zirconium dichloride.

The compounds represented by general formula (3) include, for example,
(1)(tetramethylcyclopentadienyl)titanium (bis-t-butylamide) dichloride,
(2)(tetramethylcyclopentadienyl)titanium (bisisopropylamide) dichloride,
(3)(tetramethylcyclopentadienyl)titanium (biscyclododecylamide) dichloride,
(4) (tetramethylcyclopentadienyl)titanium {bis(trimethylsilyl)amide} dichloride,
(5) (2-methyl-4-phenyl-4H-azulenyl)titanium {bis(trimethylsilyl)amide} dichloride,
(6)(2-methylindenyl)titanium (bis-t-butylamide) dichloride,
(7)(fluorenyl)titanium (bis-t-butylamide) dichloride,
(8)(3,6-diisopropylfluorenyl)titanium (bis-t-butylamide) dichloride,
(9)(tetramethylcyclopentadienyl)titanium (phenoxide) dichloride and
(10)(tetramethylcyclopentadienyl)titanium (2,6-diisopropylphenoxide) dichloride.

The compounds represented by general formula (4) include, for example,
(1)dimethylsilanediyl(tetramethylcyclopentadienyl)(t-butyla mide)titanium dichloride,
(2)dimethylsilanediyl(tetramethylcyclopentadienyl)(cyclodod ecylamide)titanium dichloride,
(3)dimethylsilanediyl(2-methylindenyl)(t-butylamide)titaniu m dichloride and
(4)dimethylsilanediyl(fluorenyl)(t-butylamide)titanium dichloride.

It should be noted that the partial component A represented by general formulae (1) to (4) can be used as a mixture of two or more compounds represented by the same general formula and/or different general formulae. The compounds obtained by replacing the dichloride of the above compounds included as examples with a dibromide, difluoride, dimethyl, diphenyl, dibenzyl, bisdimethylamide and bisdiethylamide are exemplified similarly in the same way. The compounds obtained by replacing the zirconium or titanium with hafnium are exemplified similarly in the same way.
Component [B]: a solid component containing at least a phyllosilicate having ion exchange ability and optionally one selected from the following (b-1) to (b-3)

### (b-1): a granular solid supporting an aluminum oxy compound

The aluminum oxy compound to be used for the granular solid (b-1) usable in the present invention may be conventionally known aluminoxane or a benzene-insoluble organoaluminum oxy compound given as an example in the JP-A-2-78687.

The above conventionally known aluminoxane can be produced by, for example, the following methods, and is usually obtained as a solution of which the solvent is a hydrocarbon.
(i) A method of adding an organoaluminum compound such as trialkylaluminum to a suspension of a compound containing adsorbed water or a salt containing crystallization water such as a magnesium chloride hydrate, a copper sulfate hydrate, an aluminum sulfate hydrate, a nickel sulfate hydrate and a cerous chloride hydrate in a hydrocarbon solvent and reacting the adsorbed water or crystallization water with the organoaluminum compound.
(ii) A method of directly acting water, ice or steam on an organoaluminum compound such as trialkylaluminum in a solvent such as benzene, toluene, ethyl ether and tetrahydrofuran.
(iii) A method of reacting an organoaluminum compound such as trialkylaluminum with an organic tin oxide such as dimethyl tin oxide and dibutyl tin oxide in a solvent such as decane, benzene and toluene.

The above aluminoxane may contain a small amount of organic metal components. The aluminoxane obtained by removing solvents or unreacted organoaluminum compounds by distillation from the above recovered aluminoxane solution may be dissolved again in a solvent or suspended in a poor solvent of aluminoxane.

Specific examples of the organoaluminum compound to be used to prepare aluminoxane include preferably a trialkylaluminum and a tricycloalkylaluminum and particularly preferably trimethylaluminum. The above organoaluminum compound is used alone or in combination of two or more.

The solvent to be used to prepare aluminoxane includes an aromatic hydrocarbon such as benzene, toluene, xylene, cumene and cymene; an aliphatic hydrocarbon such as pentane, hexane, heptane, octane, decane, dodecane, hexadecane and octadecane; an alicyclic hydrocarbon such as cyclopentane, cyclohexane, cyclooctane and methylcyclopentane; a petroleum fraction such as gasoline, kerosene and light oil; or a hydrocarbon solvent such as a halogenated compound, especially a chlorinated compound and a brominated compound of the above aromatic hydrocarbon, aliphatic hydrocarbon and alicyclic hydrocarbon. Ethers such as ethyl ether and tetrahydrofuran can be also used. Among these solvents, an aromatic hydrocarbon or an aliphatic hydrocarbon is particularly preferable.

The above benzene-insoluble organoaluminum oxy compound has the Al component to be dissolved in 60°C benzene, and A1 amount is usually not higher than 10% in Al atom equivalent, preferably not higher than 5% and particularly preferably not higher than 2%, that is, the compound is preferably indissoluble or hardly dissoluble to benzene.

The organoaluminum oxy compound to be used in the present invention includes also an organoaluminum oxy compound containing boron represented by general formula (5).

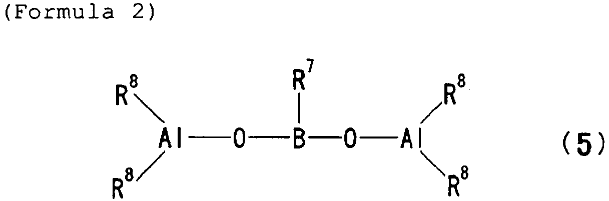

In general formula (5), R⁷ indicates a C₁₋₁₀ hydrocarbon group. R⁸ may be the same as or different from each other and indicates a hydrogen atom, a halogen atom and a C₁₋₁₀ hydrocarbon group.

The organoaluminum oxy compound containing boron represented by general formula (5) can be produced by reacting an alkyl boronate represented by general formula (6) and an organoaluminum compound under an inert-gas atmosphere in an inert solvent at -80°C to room temperature for 1 minute to 24 hours.

R⁷-B(OH)₂ (6)

(wherein, R⁷ indicates the same group as above)

Specific examples of the alkyl boronate represented by general formula (6) include methyl boronate, ethyl boronate, n-butyl boronate, isobutyl boronate, cyclohexyl boronate, phenyl boronate, 3,5-difluorophenyl boronate, pentafluorophenyl boronate and 3,5-bis(trifluoromethyl)phenyl boronate. Among these, methyl boronate, n-butyl boronate, isobutyl boronate, 3,5-difluorophenyl boronate and pentafluorophenyl boronate are preferable. These are used alone or in combination of two or more.

Specific examples of the organoaluminum compound to react with the above alkyl boronate include preferably a trialkylaluminum and a tricycloalkylaluminum, particularly preferably trimethylaluminum, triethylaluminum and triisobutylaluminum. These are used alone or in combination of two or more.

The above aluminum oxy compounds (b-1) are used alone or in combination of two or more and supported by granular carriers.

### (b-2): a granular carrier supporting an ionic compound or a Lewis acid that is capable of reacting with the component [A] and converting the component [A] to a cation

The carrier (b-2) to be used in the present invention is a granular carrier supporting an ionic compound or a Lewis acid that is capable of reacting with the component [A] and converting the component [A] to a cation. The ionic compound that is capable of reacting with the component [A] and converting the component [A] to a cation includes a complex of a cation such as a carbonyl cation and ammonium cation, and a cation of an organic boron compound such as triphenyl boron, tris(3,5-difluorophenyl) boron and tris(pentafluoro) boron; and an organic metal compound having a pentafluorophenoxy group such as diethylaluminum pentafluorophenoxide and pentafluorophenoxyethyl zinc and the like.

Examples of the Lewis acid, especially the Lewis acid that is capable of converting the component [A] to a cation include various organic boron compounds, for example, tris(pentafluoro) boron, or a metal halide such as aluminum chloride and magnesium chloride. Some of the above Lewis acids can be classified as an ionic compound that is capable of reacting with the component [A] and converting the component [A] to a cation. Consequently, a compound that belongs to both of the above Lewis acid and ionic compound shall belong to any one of them.

### (b-3): a particle of a solid acid

The particle of a solid acid (b-3) to be used in the present invention includes a solid acid such as silica-alumina, zeolite and the like.

The particles in (b-1), (b-2) and (b-3) will be described hereinafter.

The granular carrier to be used in the present invention is not particularly limited in its element composition and compound composition. A granular carrier composed of an inorganic or organic compound can be exemplified. The inorganic carrier includes silica, alumina, silica-alumina, magnesium chloride, activated carbon, inorganic silicate and the like, or a mixture of these materials.

The organic carrier includes, for example, a granular carrier of a porous polymer composed of a polymer of a C₂₋₁₄ α-olefin such as ethylene, propylene, 1-butene and 4-methyl-1-pentene, a polymer of an unsaturated aromatic hydrocarbon such as styrene and divinylbenzene, and the like, or a mixture of these polymers.

Preferably, these granular carriers have a mean particle diameter of 10 µm to 200 µm. This is because the granular carrier having a mean particle diameter smaller than 10 µm gives a polymer of too small particles, which is difficult to be handled, and the granular carrier having a mean particle diameter larger than 200 µm gives a polymer of too large particles, which tends to cause problems of sedimentation and insufficient flow in the reaction system leading to formation and clogging of an agglomerate.

The phyllosilicate having ion exchange ability

The phyllosilicate having ion exchange ability (b-4) to be used in the present invention means a silicate compound which has a crystalline structure that each plane constituted by an ionic bond or the like is stacked in parallel by the bonding strength, and in which the contained ion is exchangeable. Since most of silicates are produced mainly as the major component of natural clay minerals, they often contain foreign matters (quartz, cristobalite and the like) other than phyllosilicates having ion exchange ability. These foreign matters may be contained. Specific examples of silicates include the following phyllosilicates, which are described in "Clay Mineralogy" written by Shiramizu Haruo, published by Asakura Shoten (1995).

They are a smectite group such as montmorillonite, sauconite, beidellite, nontronite, saponite, hectorite and stevensite; a vermiculite group such as vermiculite; a mica group such as mica, illite, sericite and glauconite; attapulgite, sepiolite, palygorskite, bentonite, pyrophylite, talc, chlorite group and the like.

The silicate to be used as a raw material in the present invention is preferably a silicate having a 2:1 type structure of the main component silicate, more preferably a smectite group and particularly preferably montmorillonite. The kind of an interlayer cation is not particularly limited, but a silicate having an alkaline metal or an alkaline-earth metal as the main component of the interlayer cation is preferable from the standpoint that it can be obtained relatively easily and inexpensively as an industrial raw material.

The above silicate to be used in the present invention can be used as it is, without being particularly treated, but is preferably subjected to chemical treatment. The chemical treatment that can be used here means both of the surface treatment for removing impurities on the surface and the treatment for affecting the structure of clay. Specifically, the following acid treatment, alkali treatment, salt treatment, organic-compound treatment and the like are included.

### (i) Acid treatment

Acid treatment removes impurities on the surface and also can elute part or all of cations such as Al, Fe and Mg in the crystal structure.

The acid to be used in the acid treatment is preferably selected from hydrochloric acid, sulfuric acid, nitric acid, phosphoric acid, acetic acid and oxalic acid. Two or more kinds of salts and acids may be used for treatment. The treating conditions are not particularly limited, but preferably are usually selected from among the conditions of a salt or acid concentration of 0. 1 to 50% by weight, a treating temperature of room temperature to a boiling point and a treating time of 5 minutes to 24 hours, so as to elute at least part of the substance constituting at least one compound selected from the group consisting of the phyllosilicates having ion exchange ability. The salts and acids are generally used in the form of an aqueous solution.

### (ii) Salt treatment

It is preferable in the present invention that 40% or more, preferably 60% or more of the exchangeable cations of a metal of Group 1 that are contained in the phyllosilicates having ion exchange ability before subjected to salt treatment are exchanged with the cations dissociated from the salts shown below.

The salts to be used in the salt treatment aiming such ion exchange are a compound composed of a cation containing at least one atom selected from the group consisting of the atoms of Groups 1 to 14 and at least one anion selected from the group consisting of halogen atoms, inorganic acids and organic acids, more preferably a compound composed of a cation containing at least one atom selected from the group consisting of the atoms of Groups 2 to 14 and at least one anion selected from the group consisting of Cl, Br, I, F, PO₄, SO₄, NO₃, CO₃, C₂O₄, ClO₄, OOCCH₃, CH₃COCHCOCH₃, OCl₂, O(NO₃)₂, O(ClO₄)₂, O(SO₄), OH, O₂Cl₂, OCl_{3,} OOCH, OOCCH₂CH₃, C₂H₄O₄ and C₅H₅O₇.

Specifically, these compounds include LiF, LiCl, LiBr, LiI, Li₂SO₄, Li(CH₃COO), LiCO₃, Li(C₆H₅O₇), LiCHO₂, LiC₂O₄, LiClO₄, LiPO₄, CaCl₂, CaSO₄, CaC₂O₄, Ca(NO₃)₂, Ca₃ (C₆H₅O₇)₂, MgCl₂, MgBr₂, MgSO₄, Mg (PO₄) ₂, Mg(ClO₄)₂, MgC₂O₄, Mg(NO₃)₂, Mg(OOCCH₃)₂ and Mg C₄H₄0₄ and the like;
Ti(OOCCH₃)₄, Ti(CO₃)₂, Ti(NO₃)₄, Ti(SO₄)₂, TiF₄, TiCl₄, Zr(OOCCH₃)₄, Zr(CO₃)₂, Zr(NO₃)₄, Zr(SO₄)₂, ZrF₄, ZrCl₄, ZrOCl₂, ZrO(NO₃)₂, ZrO(ClO₄)₂, ZrO (SO₄), HF(OOCCH₃)₄, HF(CO₃)₂, HF(NO₃)₄, HF(SO₄)₂, HFOCl₂, HFF₄, HFCl₄, V(CH₃COCHCOCH₃)₃, VOSO₄, VOCl₃, VCl₃, VCl₄ and VBr₃ and the like;
Cr(CH₃COCHCOCH₃)₃, Cr(OOCCH₃)₂OH, Cr(NO₃)₃, Cr(ClO₄)₃, CrPO₄, Cr₂ (SO₄) ₃, CrO₂Cl₂, CrF₃, CrCl₃, CrBr₃, CrI₃, Mn (OOCCH₃) ₂, Mn(CH₃COCHCOCH₃)₂, MnCO₃, Mn(NO₃)₂, MnO, Mn(ClO₄)₂, MnF₂, MnCl₂, Fe (OOCCH₃) ₂, Fe (CH₃COCHCOCH₃) ₃, FeCO₃, Fe (NO₃) ₃, Fe (ClO₄) ₃, FePO₄, FeSO₄, Fe₂ (SO₄) ₃, FeF₃, FeCl₃ and FeC₆H₅O₇ and the like; Co(OOCCH₃)₂, Co (CH₃COCHCOCH₃) ₃, CoCO₃, Co (NO₃) ₂, CoC₂O₄, Co(ClO₄)₂, Co₃(PO₄)₂, CoSO₄, CoF₂, CoCl₂, NiCO₃, Ni(NO₃)₂, NiC₂O₄, Ni(ClO₄)₂, NiSO₄, NiCl₂ and NiBr₂ and the like;
Zn(OOCCH₃)₂, Zn (CH₃COCHCOCH₃) ₂, ZnCO₃, Zn (NO₃) ₂, Zn (ClO₄) ₂, Zn₃(PO₄)₂, ZnSO₄, ZnF₂, ZnCl₂, AlF₃, AlCl₃, AlBr₃, AlI₃, Al₂(SO)₃, Al₂ (C₂O₄)₃, Al(CH₃COCHCOCH₃)₃, Al(NO₃)₃, AlPO₄, GeCl₄, GeBr₄ and GeI₄ and the like.

### (iii) Alkali treatment

Examples of the treating agent to be used for alkali treatment include LiOH, NaOH, KOH, Mg (OH) ₂, Ca (OH) ₂, Sr (OH) ₂ and Ba(OH)₂.

### (iv) Organic-compound treatment

The organic compound to be used for organic-compound treatment includes trimethylammonium, triethylammonium, N,N-dimethylanilinium, triphenylphosphonium and the like.

The anion constituting an agent for organic-compound treatment includes, for example, hexafluorophosphate, tetrafluoroborate and tetraphenylborate besides the anions given as the examples of the anion constituting a salt treating agent, but is not limited thereto.

These phyllosilicates having ion exchange ability usually contain adsorbed water and interlayer water. It is preferable in the present invention to remove the adsorbed water and interlayer water before using as the component (b-4).

The heat-treating method for adsorbed water and interlayer water of phyllosilicates having ion exchange ability is not particularly limited, but it is necessary to select the conditions of the treatment so that the interlayer water may not be left or so that the structure may not be damaged. The heating time should be 0.5 hours or longer, preferably 1 hour or longer. Preferably, the water content of the component (b-4) after the water is removed is not higher than 3% by weight, preferably not higher than 1% by weight, on the base that the water content is 0% by weight after 2 hours dehydration under the conditions of a temperature of 200°C and a pressure of 1 mmHg.

As described above, the phyllosilicate having ion exchange ability obtained by salt treatment and/or acid treatment of which the water content is not higher than 3% by weight is particularly preferable as the component (b-4) in the present invention.

In addition, preferably, spherical particles of a mean particle diameter of not less than 10 µm are used as the component (b-4) . More preferably, the mean particle diameter is not less than 10 µm and not more than 200 µm from the standpoint of improving flowability and bulk density of a catalyst and a polymer particle and preventing formation of fine powder and coarse powder that may hinder polymerization operation.

Here, particles are measured using a particle-size distribution measuring device by laser diffractometry. Particle-size distribution and mean particle size are calculated by setting a refractive index of 1.33 and a shape coefficient of 1.0, using ethanol as a dispersing medium.

A natural product or commercially available product may be used as it is, as long as its particle shape is spherical, or particles having a shape and size controlled by granulating, grading, sorting and the like may be used.

The granulating method to be used here includes, for example, an agitation granulating method and a spray granulating method. Commercially available granulated product may also be used.

In addition, an organic compound, an inorganic solvent, an inorganic salt and various binders may be used in granulating. It is desirable that thus obtained spherical particles have a compressive crushing strength not lower than 0.2 MPa, particularly preferably not lower than 0.5 MPa in order to suppress fracture and fine-powder formation in a polymerization step. For an ethylene polymerization catalyst, the particle is required to have still higher compressive crushing strength, not lower than 4.0 MPa, more preferably not lower than 10 MPa with the upper limit of about 40 MPa. The compressive crushing strength is an average value of measured values of compressive strength of optional 10 or more particles using a small-size compression tester. With regard to particle strength, improvement of particle properties has a marked effect especially in prepolymerization.

In the olefin polymerization catalyst of the present invention, (b-1): a fine-particle carrier supporting an aluminum oxy compound, (b-2): a fine-particle carrier supporting an ionic compound or a Lewis acid that is capable of reacting with the component [A] and converting the component [A] to a cation, (b-3) : a fine particle of a solid acid and the fine particle of phyllosilicates having ion exchange ability can be used in combination of these 4 components as appropriate.

### Component [C]: an organoaluminum compound

The component [C] organoaluminum compound can be used as necessary for a solid catalyst component for olefin polymerization of the present invention. Preferably, the organoaluminum compound to be used as the component [C] is a compound represented by general formula (7).

AlR⁷ₚX_{3-q} (7)

It is a matter of course that a compound represented by general formula (7) can be used alone or in a mixed form with others or together with others. In general formula (7), R⁷ indicates a C₁₋₂₀ hydrocarbon group; X indicates a halogen, hydrogen, an alkoxy group and an amino group; p indicates a number larger than 0 and equal to or smaller than 3; and q is smaller than 3. R⁷ is preferably an alkyl group. Preferably, X is chlorine in the case of a halogen, a C₁₋₈ alkoxy group in the case of an alkoxy group and a C₁₋₈ amino group in the case of an amino group.

Specific Examples of the preferable organoaluminum compounds include trimethylaluminum, triethylaluminum, trinormalpropylaluminum, trinormalbutylaluminum, triisobutylaluminum, trinormalhexylaluminum, trinormaloctylaluminum, trinormaldecylaluminum, diethylaluminum chloride, diethylaluminum sesquichloride, diethylaluminum hydride, diethylaluminum ethoxide, diethylaluminum dimethylamide, diisobutylaluminum hydride and diisobutylaluminum chloride and the like. Among these compounds, a trialkylaluminum where p is 3 and q is 1 and a dialkylaluminum hydride are preferable. A trialkylaluminum where R⁷ is a C₁₋₈ hydrocarbon group is more preferable.

A metallocene catalyst composed of the above components [A] to [C] can be produced by contacting each component. The method for contacting includes a method of contacting above each component of the components [A] to [C] in a polymerization tank all at once or continuously, or at a time or several times. Contact of each component is usually carried out under an atmosphere of an inert gas such as nitrogen in an inert aliphatic or aromatic hydrocarbon solvent such as pentane, hexane, heptane, toluene and xylene. Contact temperature is not particularly limited, but preferably -20°C to 150°C. Contact may be carried out in an optional order suitable for its purpose.

The order of contact for each component is described as follows. Namely, a method of contacting both of the component [A] and the component [B] with the component [C] before contacting the component [A] with the component [B] is used.

After contacting, the mixture of each component can be washed with an aliphatic or aromatic hydrocarbon solvent.

The amounts of the components [A], [B] and [C] to be used are optional. For example, the amount of the component [A] to be used relative to the component [B] is preferably 0. 1 to 1, 000 µmol, particularly preferably 0.5 to 500 µmol per g of the component [B].

When the component [B] and the component [C] are contacted, the component [C] serves as an agent for surface treatment. Consequently, too small amount of the component [C] has less effect, whereas too large amount is wasteful. The component [B]and the component [C]are washed to remove the excessive component [C] after contacting the component [B] with the component [C].

With regard to the amount of the component [C] to be used relative to the component [B], the amount of a transition metal is preferably 0.001 to 100 µmol, particularly preferably 0.005 to 50 µmol, per g of the component [B].

When a metallocene catalyst is used as the component [A], the component [C] serves as an alkylating agent for the metallocene catalyst. Consequently, when the component [A] and the component [C] are contacted, the component [C] of too small amount does not perform the desired alkylation and hardly increases the catalyst activity, whereas the component [C] of too large amount tends to cause a side reaction with the metallocene compound. The ratio of the amount of the component [C] to the component [A], therefore, is preferably 1 to 15, particularly preferably 2 to 10 relative to the molar ratio of the transition metals.

In the present invention, the component [A] and the component [C] are contacted ([A']), and independently the component [B] and the component [C] are contacted followed by washing ([B']) and then [A'] and [B'] are contacted.

During or after contacting each component, a polymer such as polyethylene and polypropylene and an inorganic oxide such as silica and alumina may be coexistent or contacted.

### (2) Component [II]: an antioxidant for resins

The component [II] antioxidant for resins to be used in the olefin polymerization catalyst of the present invention is selected as appropriate according to its uses and molding methods from among stabilizers for use in ordinary polyolefin resins, and comprises a phenol-based antioxidant and/or a phosphorus-based antioxidant. A phenol-based antioxidant and a phosphorus-based antioxidant may be mixed in use.

Preferable examples of phenol-based antioxidants are as follows:
2,6-ditertiarybutyl-4-methylphenol,
2-ditertiarybutyl-4,6-dimethylphenol,
2,6-ditertiarybutyl-4-ethylphenol,
2,6-ditertiarybutyl-4-n-butylphenol,
2,6-ditertiarybutyl-4-isobutylphenol,
2,6-dicyclopentyl-4-methylphenol,
2-((α-methylcyclohexyl)-4,6-dimethylphenol,
2,6-dioctadecyl-4-methylphenol, 2,4,6-tricyclohexylphenol,
2,6-ditertiarybutyl-4-methoxymethylphenol,
2,6-dinonyl-4-methylphenol,
2,6-ditertiarybutyl-4-methoxyphenol,
2,5-ditertiarybutylhydroquinone,
2,5-ditertiarybutylamylhydroquinone,
2,6-diphenyl-4-octadecyloxyphenol,
2,2'-thiobis(6-tertiarybutyl-4-methylphenol),
2,2'-thiobis(4-octylphenol),
4,4'-thiobis(6-tertiarybutyl-3-methylphenol),
4,4'-thiobis(6-tertiarybutyl-2-methylphenol),
2,2'-methylenebis(6-tertiarybutyl-4-methylphenol),
2,2'-methylenebis(6-tertiarybutyl-4-ethylphenol),
2,2'-methylenebis[4-methyl-6-(α-methylcyclohexyl)phenol],
2,2'-methylenebis(4-methyl-6-cyclohexylphenol),
2,2'-methylenebis(6-nonyl-4-methylphenol),
2,2'-methylenebis(4,6-ditertiarybutylphenol),
2,2'-ethylidenebis(4,6-ditertiarybutylphenol),
2,2'-ethylidenebis(6-tertiarybutyl-4-isobutylphenol),
2,2'-methylenebis[6-(α-methylbenzyl)-4-nonylphenol],
2,2'-methylenebis[6-(α,α-dimethylbenzyl)-4-nonylphenol],
4,4'-methylenebis(2,6-ditertiarybutylphenol),
4,4'-methylenebis(6-tertiarybuty-2-methylphenol),
1,1'-bis(5-tertiarybutyl-4-hydroxy-2-methylphenyl)butane,
2,6-bis(3-tertiarybutyl-5-methyl-2-hydroxybenzyl)-4-methylp henol,
1,1,3-tris(5-tertiarybutyl-4-hydroxy-2-methylphenyl)butane,
1,1-bis(5-tertiarybutyl-4-hydroxy-2-methylphenyl)-3-n-dodec ylmercaptobutane,
ethyleneglycolbis[3,3-bis(3'-tertiarybutyl-4'-hydroxyphenyl )butylate],
bis(3-tertiarybutyl-4-hydroxy-5-methylphenyl)dicyclopentadi ene,
bis[2-(3'-tertiarybutyl-2'-hydroxy-5'-methylbenzyl)-6-terti arybutyl-4-methylphenyl]terephthalate,
1,3,5-tris(3,5-ditertiarybutyl-4-hydroxybenzyl)-2,4,6-trime thylbenzene,
bis(3,5-ditertiarybutyl-4-hydroxybenzyl)sulfide, isooctyl-3,5-ditertiarybutyl-4-hydroxybenzylmercaptoacetate,
bis(4-tertiarybutyl-3-hydroxy-2,6-dimethylbenzyl)dithiotere phthalate,
1,3,5-tris(3,5-ditertiarybutyl-4-hydroxybenzyl)isocyanurate,
1,3,5-tris(4-tertiarybutyl-3-hydroxy-2,6-dimethylbenzyl)iso cyanurate,
dioctadecyl-3,5-ditertiarybutyl-4-hydroxybenzylphosphonate and a calcium salt of monoethyl-3,5-ditertiarybutyl-4-hydroxybenzylphosphonate.

Among the above phenol-based antioxidants, the particularly preferable phenol-based antioxidant is 2,6-ditertiarybutyl-4-methylphenol, stearyl(3,5-ditertiarybutyl-4-hydroxyphenyl)propionate, 1,3,5-tris(3,5-ditertiarybutyl-4-hydroxybenzyl)-2,4,6-trime thylbenzene, 1,1,3-tris(5-tertiarybutyl-4-hydroxy-2-methylphenyl)butane and tocopherols (vitamin E). These compounds may be used alone or in a mixture.

The amount of a phenol-based antioxidant to be added is 0.001 to 10% by weight, preferably 0.002 to 1% by weight and more preferably 0.002 to 0.5% by weight relative to a polymer obtained by polymerization. A less amount of an antioxidant to be added by this method is enough to attain stabilization compared with method to be added in a later granulating-kneading step.

A phosphorus-based antioxidant is also a known stabilizer against thermal oxidation aging of plastics especially polyolefins. The phosphorus-based antioxidant is listed as an organic phosphite compound and an organic phosphonite compound.

Preferable examples of the organic phosphite compound include trilaurylphosphite, trioctadecylphosphite, distearylpentaerythritoldiphosphite or tristearylsorbitoltriphosphite. An aromatic phosphite compound, which has an aromatic hydrocarbon group such as a phenyl group, is preferable. Examples of the aromatic phosphite compound having a phenyl group include triphenylphosphite, diphenylalkylphosphite and phenyldialkylphosphite. Tris(nonylphenyl)phosphite, tris(2,4-ditertiarybutylphenyl)phosphite, bis(2,4-ditertiarybutylphenyl)pentaerythritoldiphosphite and 2,2'-ethylidenebis(2,4-ditertiarybutylphenyl)fluorophosphit e are particularly preferable.

Preferable examples of the organic phosphonite compound include specifically tetrakis(2,4-ditertiarybutylphenyl)-4,4'-biphenylenediphosp honite [Irgafos ® PEPQ], tetrakis(2-tertiarybutyl-4-methylphenyl)biphenylenediphosph onite, tetrakis(2,4-ditertiaryaluminumphenyl)biphenylenediphosphon ite, tetrakis(2,4-ditertiarybutyl-5-methylphenyl)biphenylenediph osphonite and tetrakis(2-tertiarybutyl-4,6-dimethylphenyl)biphenylenediph osphonite. Each of these may be used alone or in a mixture.

The amount of a phosphorus-based antioxidant to be added is 0.001 to 10% by weight, preferably 0.002 to 1% by weight and more preferably 0.002 to 0.5% by weight relative to a polymer obtained by polymerization. A less amount of an antioxidant to be added by this method is enough to attain stabilization compared with method to be added in a later granulating-kneading step.

### (3) Component [III]: an olefin

An α-olefin can be used as the component [III] olefin to be used for the olefin polymerization catalyst of the present invention. The α-olefin preferably has about 2 to 20 carbon atoms and includes specifically ethylene, propylene, 1-butene, 1-hexene, 1-octene and the like. Propylene and ethylene are more preferable.

These olefins are homopolymerized and/or copolymerized in prepolymerization. Monomers for copolymerization include preferably a monomer having about 2 to 20 carbon atoms (excluding one to be used as monomer) and specifically a straight-chained olefin such as ethylene, propylene, 1-butene, 1-hexene and 1-octene; a straight-chained diolefin such as 1,5-pentadiene, 1,5-hexadiene and 2-methyl-1,6-heptadiene; a cyclic olefin such as cyclopentadiene and norbornene; and an aromatic olefin such as styrene and divinylbenzene. In the case of copolymerization, the comonomer to be used can be selected from the above olefins excluding one to be served as the main component. Preferable olefins are ethylene and propylene, which can be preferably used for production of a homopolymer of ethylene or propylene, a copolymer with other α-olefin using ethylene as the main component, and a binary, tertiary or more-membered random copolymer or block copolymer with ethylene or a higher olefin using propylene as the main component.

### (4) Component [IV]: an organoaluminum compound

An organoaluminum compound similar to the organoaluminum compound, the component [C] used in the component [I] can be used as the component [IV] organoaluminum compound that is used in addition to the above components [I] to [III] for the olefin polymerization catalyst produced in the present invention.

These organoaluminum compounds serve to keep the activity of a prepared olefin polymerization catalyst by covering the catalyst surface during storage. The organoaluminum compound includes specifically a trialkylaluminum compound and the like such as triethylaluminum and tributylaluminum and the like, and any other compound that can attain the object of the present invention without particular limitation. Consequently, the residues of an organoaluminum compound used as the component [C], for example, can be used as it is for preserving the catalyst. However, it is preferable to add an organoaluminum compound as the component [IV] for preserving a polymerization catalyst when it is necessary to preserve the catalyst, because an organoaluminum compound used usually as the component [C] when preparing an olefin polymerization catalyst, is often washed off in the step for preparing the polymerization catalyst, or because an excessive amount of an organoaluminum compound used in the step for preparing the catalyst could deactivate the catalyst. It is preferable, therefore, for a suitable amount of an organoaluminum compound to be added as the component [IV] after termination of prepolymerization, more preferably immediately after termination of prepolymerization.

The amount of an organoaluminum compound to be added can be optionally selected. However, a too large amount worsens particle quality of a catalyst, whereas a too small amount impairs storage stability.

Taking a metallocene catalyst as a specific example, the amount of an organoaluminum compound to be added is a molar ratio of organoaluminum compound/component [A] of 5 to 100, preferably 10 to 50. The amount of an organoaluminum compound per g of the component [B] is 0.001 to 10 mmol, preferably 0.01 to 5 mmol.

Since an organoaluminum compound added as the component [IV] serves to prevent a catalyst from being deactivated by an anticatalyst component, especially by an antioxidant in the present invention, the proper amount of the component [IV] also depends on the amount of the antioxidant (component [II]) to be used. The molar ratio of the component [IV] to the component [II] is preferably 0.5 to 30, more preferably 0.5 to 15.

### 2. Prepolymerization treatment

The olefin polymerization catalyst can be produced in prepolymerization by contacting above each component of the components [I] to [III] in a prepolymerization tank all at once or continuously, or at a time or several times. Contact of each component is usually carried out under an atmosphere of an inert gas such as nitrogen in an inert aliphatic or aromatic hydrocarbon solvent such as pentane, hexane, heptane, toluene and xylene.

Contact may be carried out in an optional order suitable for its purpose. Preferable order of contact includes, for example, a method of adding the component [II] in the step where the component [I] and the component [III] are contacted and subjected to prepolymerization and a method of adding the component [II] immediately after the component [I]and the component [III] are contacted and subjected to prepolymerization. The former method has the advantage that an olefin polymerization catalyst of good powder quality can be obtained without lowering the catalyst activity and forming a fine powder. The latter method has the advantage that an olefin polymerization catalyst that can produce a polyolefin resin having high stability can be obtained.

When the component [IV] is added, contact may be carried out similarly to the above in an optional order suitable for its purpose. Preferable order of contact includes, for example, (a): a method of adding the component [IV] in the step where the component [I], the component [II] and the component [III] are contacted and subjected to prepolymerization (b) : a method of adding the component [IV] immediately after the component [I], the component [II] and the component [III] are contacted and subjected to prepolymerization and (c) : a method of adding the component [II] and the component [IV] at the same time or one by one immediately after the component [I] and the component [III] are contacted and subjected to prepolymerization. Among these methods, the method (b) is particularly preferable. By the methods (a), (b) and (c), an olefin polymerization catalyst of good powder quality can be obtained without lowering the catalyst activity and forming a fine powder.

The temperature and the time for prepolymerization are not particularly limited, but preferably -20 to 100°C and 5 minutes to 24 hours respectively.

It is preferable in prepolymerization that the component [III] olefin is contacted with the component [I] by a method of feeding to a prepolymerization tank so as to keep constant rate or constant pressure, and a combined method thereof, and a method of changing step by step, and the like. The ratio of the amount of the component [III] (for prepolymerization) to amount of the component [I] is preferably 0.01 to 100, more preferably 0.1 to 80 based on mass. The ratio of the amount of the component [III] for prepolymerization to amount of the component [I] less than 0.01 gives less effective prepolymerization and makes it difficult to suppress particle crushing and fine-powder formation, whereas the ratio exceeding 100 gives a giant particle to cause clogging in a catalyst feed line and activity drop.

The component [II]is added so as to be 0.001% by weight to 0.5% by weight, preferably 0.002% by weight to 0.1% by weight relative to a polymer obtained by polymerization of an olefin.

The polymer powder obtained by using thus obtained olefin polymerization catalyst can effectively stabilize a polyolefin with a small amount of a stabilizer added, and the stabilizer does not necessarily require to be added in a melt-kneading step to consume a large amount of energy. The polymer powder obtained by using a prepolymerized catalyst has good powder quality and high bulk density and is free from particle crushing and fine-powder formation, and thus is free from depositing and clogging in a catalyst feed line, a polymerization reactor, a pipeline, a heat exchanger and the like, which contributes to stable olefin polymerization.

### 3. Preservation of olefin polymerization catalyst

The olefin polymerization catalyst produced in the present invention may be used for polymerization immediately after preparation, but thus obtained olefin polymerization catalyst can also be preserved in the presence of the component [IV'] organoaluminum compound.

The component [IV']serves to keep the activity of a prepared olefin polymerization catalyst by covering the surface thereof as well as the above-mentioned organoaluminum compound (component [IV]) does. Consequently, when the component [IV] which has the same function as the component [IV'] is already added in preparation of an olefin polymerization catalyst, there is no need to add the component [IV'] in preserving the olefin polymerization catalyst.

The amount of an organoaluminum compound to be added in preservation can be optionally selected. However, too large amount thereof degrades particle quality of the catalyst, whereas too small amount thereof impairs storage stability.

Taking a metallocene catalyst as a specific example, the amount of an organoaluminum compound to be added is a molar ratio of organoaluminum compound/component [A] of 5 to 100, preferably 10 to 50. The amount of an organoaluminum compound per g of the component [B] is 0.001 to 10 mmol, preferably 0.01 to 5 mmol.

Since an organoaluminum compound added as the component [IV'] serves to prevent a catalyst from being deactivated by an anticatalyst component, especially by an antioxidant in the present invention, the proper amount of the component [IV'] also depends on the amount of the antioxidant (component [II]) to be used. The molar ratio of the component [IV'] to the component [II] is preferably 0.5 to 30, more preferably 0.5 to 15.

An olefin polymerization catalyst may be preserved in any state of slurry containing a solvent, semidryness containing a small amount of a solvent and perfect dryness without any solvent. In this context, the solvent is a single liquid or a mixture of inert hydrocarbons such as hexane, heptane, pentane, cyclohexane, benzene, toluene, xylene and liquid paraffin. The slurry concentration is 0.0001 g to 10 g, preferably 0.01 g to 0.5 g per mL of a solvent.

The storage temperature of an olefin polymerization catalyst is not higher than 90°C, preferably not higher than 50°C. The lower temperature gives more effect.

The olefin polymerization catalyst produced in the present invention, which is preserved in the presence of the above organoaluminum compound, can be preserved for longer time under a dry condition.

The method for drying an olefin polymerization catalyst containing a solvent includes removing the solvent by heating, removing the solvent in gas-flow, removing the solvent under reduced pressure and the like. Any method is conducted under an atmosphere of an inert gas such as nitrogen and argon to prevent the catalyst from contacting with air or water.

The drying temperature is not higher than 80°C or not higher than the boiling point of a solvent, preferably 0°C to 50°C. An inert gas such as nitrogen and argon is used for drying in gas-flow. Prior to removing a solvent by drying, solid components in a catalyst slurry may be deposited and then the supernatant liquid may be removed by decantation. The initial concentration of a catalyst slurry to start drying is not necessary to be limited, but may be 0.0001 g to 10 g, preferably 0.01 g to 0.5 g of the component [B] per mL of the solvent.

### 4. Polymerization of olefin

In polymerization of olefins using the olefin polymerization catalyst produced in the present invention, the polymerizable olefin is preferably an α-olefin having about 2 to 20 carbon atoms and includes specifically ethylene, propylene, 1-butene, 1-hexene and 1-octene. Propylene and ethylene are more preferable. Copolymerization may be conducted besides homopolymerization. Comonomers include preferably a monomer having about 2 to 20 carbon atoms (excluding one to be used as monomer) and specifically a straight-chained olefin such as ethylene, propylene, 1-butene, 1-hexene and 1-octene; a straight-chained diolefin such as 1,5-pentadiene, 1,5-hexadiene and 2-methyl-1,6-heptadiene; a cyclic olefin such as cyclopentadiene and norbornene; and an aromatic olefin such as styrene and divinylbenzene. In the case of copolymerization, the comonomer to be used can be selected from the above olefins excluding one to be served as the main component. Preferable olefins are ethylene and propylene, which can be preferably used for production of a homopolymer of ethylene or propylene, a copolymer with other α-olefin using ethylene as the main component and a binary, tertiary or more-membered random copolymer or block copolymer with ethylene or a higher olefin using propylene as the main component.

Any mode of polymerization can be used for olefin polymerization as long as a catalyst component and each monomer are effectively contacted. Specifically, a slurry method of using an inert solvent, a slurry method of using propylene as a solvent without substantially using an inert solvent, a solution polymerization method or a gas-phase method of keeping each monomer gaseous without substantially using a liquid solvent can be used. A continuous polymerization method, a batch polymerization method or a method accompanied by prepolymerization is also employed. In the case of slurry polymerization, a single liquid or a mixture of a saturated aliphatic or aromatic hydrocarbon such as hexane, heptane, pentane, cyclohexane, benzene and toluene is used. The polymerization temperature is 0 to 200°C. Hydrogen can be supplimentarily used as an molecular weight modifier. Polymerization pressure is in a range of 0 to 2,000 kg/cm²G.

It is preferable that an organoaluminum compound is present in an olefin polymerization system to prevent impurities contained in raw material monomers from impairing catalyst activity in polymerization. Similar compounds to the above component [C], component [IV] and component [IV'] are used as the organoaluminum compound.

The polyolefin obtained by polymerization using the olefin polymerization catalyst produced in the present invention is a highly stabilized polyolefin because a stabilizer is uniformly dispersed in the polymer.

### Examples

The present invention will be described specifically with reference to the following examples, to which, however, the present invention is not limited as long as the examples do not apart from the scope of the present invention. Evaluation of properties in the examples and comparative examples is based on the following items.
(1) MFR: melt index determined at 230°C, under a load of 2.16 kg in accordance with JIS-K-6758
(2) polymer BD: bulk density of polymer determined in accordance with ASTM D1895-69

### (Example 1) (Reference example - not in accordance with invention)

### (1) Synthesis of catalyst

A 5 L separable flask equipped with a stirrer and a reflux apparatus was charged with 1,700 g of pure water, and 500 g of 98% sulfuric acid was added dropwise. 300 g of granular montmorillonite of a mean particle diameter of 45 µm (Benclay SL produced by Mizusawa Industrial Chemicals, Ltd. was used as the raw material) was added to the above solution followed by stirring and then subjected to reaction at 90°C for 2 hours. The slurry was filtered and washed. The recovered cake was added with 1,230 g of 27% aqueous solution of lithium sulfate and subjected to reaction at 90°C for 2 hours. The slurry was filtered and washed until the pH of the filtrate goes up to 4 or higher. The recovered cake was subjected to preliminary drying and then dried at 200°C for 2 hours to obtain 275 g of chemically treated montmorillonite having a mean particle diameter of 43 µm and a spherical shape. The number of the particles having an M/L value of not lower than 0. and not higher than 1.0 was 93%.

A 1 L flask was charged with 10 g of chemically treated montmorillonite, 65 ml of heptane and 35.4 ml (25 mmol) of a solution of triisobutylaluminum in heptane and stirred at room temperature for one hour. The slurry was then washed with heptane until a remaining liquid ratio of 1/100 was obtained. Finally, the amount of the slurry was adjusted to 100 ml. Further, the slurry was added with 2.1ml (1.5 mmol) of a solution of triisobutylaluminum in heptane and stirred at room temperature for 10 minutes.

Toluene (60 ml) was added to (r)-dichloro[1,1'-dimethylsilylenebis{2-ethyl-4-(2-fluoro-4 -biphenyl)-4H-azulenyl}]hafnium (300 µmol) in a 200 ml flask to form a slurry, which was then charged in the above 1 L flask and stirred at room temperature for 60 minutes.

### (2) Prepolymerization

10 ml of a 30% by weight solution of stearyl(3,5-ditertiarybutyl-4-hydroxyphenyl)propionate in heptane as a phenol-based stabilizer and 10 ml of a 30% by weight solution of tris(2,4-ditertiarybutylphenyl)phosphite in heptane as a phosphorus-based stabilizer were mixed in a 50 ml flask and then charged in the above 1 L flask followed by stirring for 30 minutes.

The total amount of the above slurry was charged in an agitation-type autoclave of an internal volume of 1.0 L that was sufficiently replaced with nitrogen. When the temperature became stable at 40°C, propylene was supplied at a rate of 10 g/hour to keep the temperature. After 2 hours, the propylene was stopped to supply and the slurry was left for standing for another one hour. After termination of the prepolymerization, residual monomers were purged off and stirring was stopped. The slurry was introduced into a 1 L flask that was sufficiently replaced with nitrogen. The slurry was dried under reduced pressure to recover 36.4 g of a prepolymerization catalyst. The ratio of polypropylene to the catalyst was 2.0 g/g. The prepolymerization catalyst had a mean particle diameter of 61 µm.

### (3) Polymerization

An autoclave equipped with an induction stirrer of an internal volume of 3 L was sufficiently replaced with propylene and then charged with 2.9 ml of a solution of triisobutylaluminum in heptane (140 mg/ml) and 200 ml of hydrogen followed by introduction of 750 g of liquefied propylene, and heated to 65°C. The prepolymerization catalyst obtained in the above (2) was made to slurry with heptane, of which 144 mg was pressed into the autoclave as a prepolymerization catalyst to start polymerization. The internal temperature of tank was kept at 65°C. After one hour since catalyst introduction, polymerization was terminated by purging off residual monomers and replacing the gas phase in the autoclave with argon 5 times. The recovered polymer was dried at 40°C for one hour in a vacuum dryer. The obtained polymer amounted to 210 g. The polymer BD was 0.48 g/cm³ and the powder quality was good. The content of the phenol-based stabilizer and the content of the phosphorus-based stabilizer were each 45 ppm in the polymer.

### (4) Evaluation of stability of polymer

The stability of the obtained polymer was evaluated by measurement of MFR repeated 3 times with a melt indexer. The measured MFR of the obtained polymer without an additional stabilizer was 18.4 g/10 min. The obtained strand was introduced again into the melt indexer and MFR was measured, which was repeated 2 times. The third measured MFR was 21.7 g/10 min, which showed good stability. The results are shown in Table 1.

### (Example 2) (Reference Example - not in accordance with invention)

A polymer was obtained in the same manner as in Example 1 except that the polymerization time of Example 1 (3) was changed to 15 minutes. The obtained polymer amounted to 50 g. The stability was evaluated in the same manner as in Example 1. The results are shown in Table 1. The MFR was stable.

### (Comparative Example 1)

A catalyst was prepared and a polymer was obtained using the catalyst in the same manner as in Example 1 except that the phenol-based stabilizer and the phosphorus-based stabilizer of Example 1 (2) were not added. The obtained polymer amounted to 350 g. The polymer BD was 0.48 g/cm³ and the powder quality was good. The stability was evaluated in the same manner as in Example 1. The results are shown in Table 1. A rise of the MFR was observed in each measurement, which showed degradation of the polymer.

### (Comparative Example 2)

A catalyst was prepared in the same manner as in Example 1 except that prepolymerization was not conducted. The slurry was added with the phenol-based stabilizer and the phosphorus-based stabilizer in the same manner as in Example 1 and dried as it was. The obtained polymer amounted to 180 g. The polymer BD was 0.42 g/cm³ and the powder quality was poor with fine powders in the polymer powder. The stability was evaluated in the same manner as in Example 1. The results are shown in Table 1. The MFR was stable.

### (Comparative Example 3)

Stearyl(3,5-ditertiarybutyl-4-hydroxyphenyl)propionat e and tris(2,4-ditertiarbutylphenyl)phosphite were added in a slurry state so as to be each 0.0045 parts by weight relative to 100 parts by weight of the polymer obtained in Example 1 followed by drying. The stability was then evaluated in the same manner as in Example 1. The results are shown in Table 1. It can be understood that a large amount of an antioxidant is required for obtaining the same ratio of MFR change as in the Examples.

### (Example 3) (Reference Example - not in accordance with invention)

### (1) Prepolymerization

After preparing a catalyst in the same manner as in Example 1, 5 ml of a 30% by weight solution of tetrakis[methylene-3-(3',5'-ditertiarybutyl-4'-hydroxypheny 1) propionate]methane in heptane as a phenol-based stabilizer and 5 ml of a 30% by weight solution of tris(2,4-ditertiarybutylphenyl)phosphite in heptane as a phosphorus-based stabilizer were mixed in a 50 ml flask and then charged in the above 1 L flask followed by stirring for 30 minutes.

The total amount of the above slurry was charged in an agitation-type autoclave of an internal volume of 1.0 L that was sufficiently replaced with nitrogen. When the temperature became stable at 40°C, propylene was supplied at a rate of 10 g/hour to keep the temperature. After 2 hours, the propylene was stopped to supply and the slurry was left for standing for another one hour. After termination of the prepolymerization, residual monomers were purged off and stirring was stopped. The slurry was introduced into a 1 L flask that was sufficiently replaced with nitrogen. The slurry was dried under reduced pressure to recover 33 . 4 g of a prepolymerization catalyst. The ratio of polypropylene to the catalyst was 2.2 g/g. The prepolymerization catalyst had a mean particle diameter of 58 µm.

### (2) Polymerization

An autoclave equipped with an induction stirrer of an internal volume of 3 L was sufficiently replaced with propylene and then charged with 2.9 ml of a solution of triisobutylaluminum in heptane (140 mg/ml) and 200 ml of hydrogen followed by introduction of 750 g of liquefied propylene, and heated to 65°C. The prepolymerization catalyst obtained in the above (1) was made to a slurry with heptane, of which 116 mg was pressed into the autoclave as a prepolymerization catalyst to start polymerization. The internal temperature of tank was kept at 65°C. After one hour since catalyst introduction, the polymerization was terminated by purging off residual monomers and replacing the gas phase in the autoclave with argon 5 times. The recovered polymer was dried at 40°C for one hour in a vacuum dryer. The obtained polymer amounted to 165 g. The polymer BD was 0.47 g/cm³ and the powder quality was good. The content of the phenol-based stabilizer and the content of the phosphorus-based stabilizer were each 26 ppm in the polymer.

### (3) Evaluation of stability

The stability was evaluated in the same manner as in Example 1. The results are shown in Table 1. The MFR was stable.

### (Example 4)

### (1) Synthesis of catalyst

150 g of commercially available montmorillonite (Benclay SL produced by Mizusawa Industrial Chemicals, Ltd.) was gradually added to 2,850 g of distilled water and stirred for a few hours to form a uniform slurry and then subjected to spray-granulating to obtain particles of a mean particle diameter of 10.1 µm. A 1.0 L glass flask equipped with a stirrer was slowly charged with 510 g of distilled water and 150 g of concentrated sulfuric acid (96%) to disperse 80 g of the above obtained particles followed by heat treatment at 90°C for 2 hours. After cooling, the slurry was filtered under reduced pressure to recover a cake. The cake was washed several times with distilled water and dried at 110°C to obtain 67.5 g of acid-treated particles. 50 g of the acid-treated particles was gradually added to 150 g of distilled water and stirred. The slurry was subjected again to spray-granulating to recover 45 g of spherical particles of a catalyst carrier having a mean particle diameter of 69.3 µm. Measurement of the shape showed that the number of the particles having an M/L value of not lower than 0.8 and not higher than 1.0 was 92%. The particles were dried under reduced pressure at 200°C for 2 hours.

A 1 L flask was charged with 10 g of the above prepared particles of a catalyst carrier, 65 ml of heptane and 35.4 ml (25 mmol) of a solution of triisobutylaluminum in heptane and stirred at room temperature for one hour. The slurry was then washed with heptane until a remaining liquid ratio of 1/100 was obtained. Finally, the amount of the slurry was adjusted to 100 ml.

Toluene (60 ml) was added to (r)-dichloro[1,1'-dimethylsilylenebis{2-ethyl-4-(2-fluoro-4 -biphenyl)-4H-azulenyl}]hafnium (300 µmol) to form a slurry and then added with 2.1 ml (1.5 mmol) of a solution of triisobutylaluminum in heptane and stirred at room temperature for 10 minutes. This slurry was added to the above 1 L flask and stirred at room temperature for 60 minutes.

### (2) Prepolymerization

10 ml of a 30% by weight solution of stearyl(3,5-ditertiarybutyl-4-hydroxyphenyl)propionate in heptane as a phenol-based stabilizer and 10 ml of a 30% by weight solution of tris(2,4-ditertiarybutylphenyl)phosphite in heptane as a phosphorus-based stabilizer were mixed in a 50 ml flask and then charged in the above 1 L flask followed by stirring for 30 minutes.

The total amount of the above slurry was charged in an agitation-type autoclave of an internal volume of 1.0 L that was sufficiently replaced with nitrogen. When the temperature became stable at 40°C, propylene was supplied at a rate of 10 g/hour to keep the temperature. After 2 hours, the propylene was stopped to supply and the slurry was left for standing for another one hour. After termination of the prepolymerization, residual monomers were purged off and stirring was stopped. The slurry was introduced into a 1 L flask that was sufficiently replaced with nitrogen. The slurry was dried under reduced pressure to recover 37. 7 g of a prepolymerization catalyst. The ratio of polypropylene to the catalyst was 2.1 g/g. The prepolymerization catalyst had a mean particle diameter of 98. 3 µm.

### (3) Polymerization

Polymerization was conducted in the same manner as in Example 1 (3). 75 mg of the prepolymerization catalyst was introduced. The recovered polymer was dried at 40°C for one hour in a vacuum dryer. The obtained polymer amounted to 259 g. The polymer BD was 0.41 g/cm³ and the powder quality was good. The content of the phenol-based stabilizer and the content of the phosphorus-based stabilizer were each 23 ppm in the polymer.

### (4) Evaluation of stability of polymer

The stability of the obtained polymer was evaluated by measurement of MFR repeated 3 times with a melt indexer. The measured MFR of the obtained polymer without an additional stabilizer was 15.3 g/10 min. The obtained strand was introduced again into the melt indexer and MFR was measured, which was repeated 2 times. The third measured MFR was 19.1 g/10 min, which showed good stability. The results are shown in Table 1.

### (Example 5) (Reference Example - not in accordance with invention)

### (1) Synthesis of catalyst

A vessel of an internal volume of 2 L equipped with a high-speed stirrer was sufficiently replaced with nitrogen and charged with 700 ml of refined kerosene, 10 g of commercially available MgCl₂, 24.2 g of ethanol and 3 g of EMASOL 320 (produced by Kao-Atlas Co., sorbitan distearate), heated up under stirring and continued to stir at 3,000 rpm at 120°C for 30 minutes. This solution was transferred under high-speed stirring through a Teflon ® tube of an inside diameter of 5 mm to a 2 L glass flask charged with 1 liter of refined kerosene chilled in advance to -10°C. A solid obtained by filtration was washed with hexane to obtain a carrier having a particle size of 40 µm to 100 µm.

A 300 ml glass flask was charged with 10 g of the above carrier (containing 30.7 mmol of MgCl₂) and 100 ml of refined kerosene and added dropwise with 21.1 ml of triethylaluminum at 5°C under stirring, and then stirred at 25°C for one hour and further stirred at 80°C for 3 hours. The solid part was filtered, washed with hexane and dried. The obtained solid was suspended in 100 ml of refined kerosene and dry air was injected in the suspension under stirring at room temperature for 2 hours. The solid part was filtered and washed with hexane. The obtained solid was suspended in 100 ml of refined kerosene and then added with 1.9 ml of ethyl benzoate, stirred at 25°C for one hour and further stirred at 80°C for 2 hours. The solid part was filtered, sufficiently washed with hexane and then dried. The solid was transferred to a 200 ml glass flask, added with 100 ml of TiCl₄, stirred at 90°C for 2 hours and then removed a supernatant liquid by decantation and further added with 100 ml of TiCl₄ followed by stirring at 90°C for 2 hours. The solid obtained by hot filtration was sufficiently washed with hot kerosene and hexane and dried under reduced pressure to obtain a titanium-containing catalyst containing 2.4% by weight of titanium in terms of Ti atom. The mean particle diameter was 52 µm.

### (2) Prepolymerization

5 ml of a 30% by weight solution of stearyl(3,5-ditertiarybutyl-4-hydroxyphenyl)propionate in heptane as a phenol-based stabilizer and 5 ml of a 30% by weight solution of tris(2,4-ditertiarybutylphenyl)phosphite in heptane as a phosphorus-based stabilizer were mixed and stirred in a 20 ml flask.

An agitation-type autoclave of an internal volume of 1.0 L that was sufficiently replaced with nitrogen was charged with 500 ml of hexane, 1 mmol of triethylaluminum, the above slurry of stabilizers and 2 g (1.0 mmol in terms of titanium atom) of a titanium-containing catalyst and then supplied with 10.5 g of propylene at 20°C for 120 minutes to conduct prepolymerization. After termination of the reaction, unreacted propylene was purged off and stirring was stopped. The slurry was introduced into a 1 L flask that was sufficiently replaced with nitrogen. The slurry was dried under reduced pressure to recover 6.3 g of a prepolymerization catalyst. The ratio of polypropylene to the catalyst was 2.1 g/g. The prepolymerization catalyst had a mean particle diameter of 67.3 µm.

### (3) Polymerization

An autoclave equipped with an induction stirrer of an internal volume of 3 L was sufficiently replaced with propylene and then charged with 0.5 mmol of triethylaluminum, 0.1 mmol of diisopropyldimethoxysilane, hydrogen and 500 g of liquefied propylene and heated to 65°C. 21 mg of the prepolymerization catalyst was pressed into the autoclave to start polymerization. The internal temperature of tank was kept at 65°C. After one hour since catalyst introduction, polymerization was terminated by purging off residual monomers and replacing the gas phase in the autoclave with argon 5 times. The recovered polymer was dried at 40°C for one hour in a vacuum dryer. The obtained polymer amounted to 150 g. The polymer BD was 0.48 g/cm³ and the powder quality was good. The content of the phenol-based stabilizer and the content of the phosphorus-based stabilizer were each 18 ppm in the polymer.

### (4) Evaluation of stability of polymer

The stability of the obtained polymer was evaluated by measurement of MFR repeated 3 times with a melt indexer. The measured MFR of the obtained polymer without an additional stabilizer was 23.5 g/10 min. The obtained strand was introduced again into the melt indexer and MFR was measured, which was repeated 2 times. The third measured MFR was 30.3 g/10 min, which showed good stability. The results are shown in Table 1.

### (Example 6) (Reference Example - not in accordance with invention)

### (1) Synthesis of catalyst

A 5 L separable flask equipped with a stirrer and a reflux apparatus was charged with 1,700 g of pure water, and 500 g of 98% sulfuric acid was added dropwise. 300 g of granular montmorillonite of a mean particle diameter of 45 µm (Benclay SL produced by Mizusawa Industrial Chemicals, Ltd. was used as the raw material) was added to the above solution followed by stirring and then subjected to reaction at 90°C for 2 hours. The slurry was filtered and washed. The recovered cake was added with 1,230 g of 27% aqueous solution of lithium sulfate and subjected to reaction at 90°C for 2 hours. The slurry was filtered and washed until the pH of the filtrate goes up to 4 or higher. The recovered cake was subjected to preliminary drying and then dried at 200°C for 2 hours to obtain 275 g of chemically treated montmorillonite having a mean particle diameter of 43 µm and a spherical shape. The number of the particles having an M/L value of not lower than 0.8 and not higher than 1.0 was 93% of that of the total particles.

A 1 L flask was charged with 10 g of chemically treated montmorillonite, 65 ml of heptane and 35.4 ml (25 mmol) of a solution of triisobutylaluminum in heptane and stirred at room temperature for one hour. The slurry was then washed with heptane until a remaining liquid ratio of 1/100 was obtained. Finally, the amount of the slurry was adjusted to 100 ml. Further, the slurry was added with 2.1ml (1.5 mmol) of a solution of triisobutylaluminum in heptane and stirred at room temperature for 10 minutes.

Toluene (60 ml) was added to (r)-dichloro[1,1'-dimethylsilylenebis{2-ethyl-4-(2-fluoro-4 -biphenyl)-4H-azulenyl}]hafnium (300 µmol) in a 200 ml flask to form a slurry, which was then charged in the above 1 L flask and stirred at room temperature for 60 minutes.

### (2) Prepolymerization

The total amount of the above slurry was charged in an agitation-type autoclave of an internal volume of 1.0 L that was sufficiently replaced with nitrogen, and added with 340 ml of heptane. When the temperature became stable at 40°C, propylene was supplied at a rate of 10 g/hour to keep the temperature. After 2 hours, the propylene was stopped to supply and the slurry was left for standing for another one hour. After termination of prepolymerization, residual monomers were purged off and stirring was stopped. The slurry was introduced into a 1 L flask that was sufficiently replaced with nitrogen. On the other hand, 10 ml of a 30% by weight solution of stearyl(3,5-ditertiarybutyl-4-hydroxyphenyl)propionate in heptane as a phenol-based stabilizer and 10 ml of a 30% by weight solution of tris(2,4-ditertiarybutylphenyl)phosphite in heptane as a phosphorus-based stabilizer were mixed in a 50 ml flask to prepare an antioxidant solution in advance. This antioxidant solution was added to the above 1 L flask followed by stirring for 30 minutes. The slurry was dried under reduced pressure to recover 36.2 g of a prepolymerization catalyst. The ratio of polypropylene to the catalyst was 2.0 g/g. The prepolymerization catalyst had a mean particle diameter of 61 µm.

### (3) Polymerization

An autoclave equipped with an induction stirrer of an internal volume of 3 L was sufficiently replaced with propylene and then charged with 2.9 ml of a solution of triisobutylaluminum in heptane (140 mg/ml) and 200 ml of hydrogen followed by introduction of 750 g of liquefied propylene, and heated to 65°C. The prepolymerization catalyst obtained in the above (2) was made to a slurry with heptane, of which 144 mg was pressed into the autoclave as a prepolymerization catalyst to start polymerization. The internal temperature of tank was kept at 65°C. After one hour since catalyst introduction, polymerization was terminated by purging off residual monomers and replacing the gas phase in the autoclave with argon 5 times. The recovered polymer was dried at 40°C for one hour in a vacuum dryer. The obtained polymer amounted to 198 g. The polymer BD was 0.48 g/cm³ and the powder quality was good. The content of the phenol-based stabilizer and the content of the phosphorus-based stabilizer were each 48 ppm in the polymer.

### (4) Evaluation of stability of polymer

The stability of the obtained polymer was evaluated by measurement of MFR repeated 3 times with a melt indexer. The measured MFR of the obtained polymer without an additional stabilizer was 20.4 g/10 min. The obtained strand was introduced again into the melt indexer and MFR was measured, which was repeated 2 times. The third measured MFR was 23.7 g/10 min, which showed good stability. The results are shown in Table 1.

### (Example 7) (Reference Example - not in accordance with invention)

### (1) Synthesis of catalyst and prepolymerization

Synthesis of catalyst and prepolymerization were conducted in the same manner as in Example 6 except that granular montmorillonite of a mean particle diameter of 18 µm was used. The mean particle diameter of the prepolymerization catalyst was 28 µm.

### (2) Polymerization

Polymerization was evaluated in the same manner as in Example 6. As the result, 210 g of a polymer was obtained. The polymer BD was 0.46 g/cm³ and the powder quality was good. The content of the phenol-based stabilizer and the content of the phosphorus-based stabilizer were each 45 ppm in the polymer.

### (3) Evaluation of stability of polymer

The stability of the polymer was evaluated in the same manner as in Example 6. The measured MFR of the obtained polymer without an additional stabilizer was 10.2 g/10 min. The obtained strand was introduced again into the melt indexer and MFR was measured, which was repeated 2 times. The third measured MFR was 13.3 g/10 min, which showed good stability. The results are shown in Table 1.

### (Comparative Example 4)

A prepolymerization catalyst was produced in the same manner as in Example 1 (2), except that a phenol-based stabilizer and a phosphorus-based stabilizer were not added.

An autoclave equipped with an induction stirrer of an internal volume of 3 L was sufficiently replaced with propylene and then charged with 2.9 ml of a solution of triisobutylaluminum in heptane (140 mg/ml) and 2.0 ml of a solution of 2,6-ditertiarybutyl-4-methylphenol in heptane (0.15 mg/ml), followed by introduction of 102 ml of hydrogen, 33 g of ethylene and 750 g of liquefied propylene, and heated to 60°C. The prepolymerization catalyst was made to a slurry with heptane, of which 24 mg was pressed into the autoclave as a prepolymerization catalyst to start polymerization. The internal temperature of tank was kept at 60°C. After one hour, residual gases were purged off and the gas phase in the autoclave was replaced with argon 5 times. The obtained polymer was dried at 40°C in a vacuum dryer. The obtained polymer amounted to 229 g. The polymer BD was 0.46 g/cm³ and the powder quality was good. The stability of the polymer was evaluated in the same manner as in Example 1. The measured MFR of the obtained polymer without an additional stabilizer was 12.3 g/10 min. The third measured MFR was 17.2 g/10 min, showing a MFR rise at each measurement. The strand after MFR measurement was colored.

### (Comparative Example 5)

A prepolymerization catalyst was produced in the same manner as in Example 1 (2), except that a phenol-based stabilizer and a phosphorus-based stabilizer were not added.

An autoclave equipped with an induction stirrer of an internal volume of 3 L was sufficiently replaced with propylene and then charged with 2.9 ml of a solution of triisobutylaluminum in heptane (140 mg/ml) and 2.0 ml of a solution of stearyl(3,5-ditertiarybutyl-4-hydroxyphenyl)propionate in heptane (25 mg/ml) as a phenol-based stabilizer and 2.0 ml of a solution of tris(2,4-ditertiarybutylphenyl)phosphite in heptane (25 mg/ml) as a phosphorus-based stabilizer followed by introduction of 200 ml of hydrogen and 750 g of liquefied propylene, and heated to 65°C. The above prepolymerization catalyst was made to a slurry with heptane, of which 120 mg was pressed into the autoclave as a prepolymerization catalyst to start polymerization. The internal temperature of tank was kept at 65°C. After one hour since catalyst introduction, polymerization was terminated by adding 10 ml of ethanol, purging off residual monomers and replacing the gas phase in the autoclave with argon 5 times. The recovered polymer was dried at 40°C for one hour in a vacuum dryer. The obtained polymer amounted to 150 g. The polymer BD was 0.45 g/cm³ Fine powders were deposited on the reactor wall. The content of the phenol-based stabilizer and the content of the phosphorus-based stabilizer were 82 ppm and 100 ppm respectively in the polymer, which would show that about two-thirds of the introduced stabilizers were not incorporated in the polymer. The stability evaluation showed that the MFR was stable, but the polymer was colored after a few days.

**(Table 1)**

| | Prepolymer ization | Polymer BD (g/cm³) | Content Of AntiOxidant (ppm) | MFR(g/10min) | | MFR Change Ratio (%) (*1) |
|---|---|---|---|---|---|---|
| | | | | 1st Data | 3rd Data | |
| Ex. 1* | Yes | 0.48 | 90 | 18.4 | 21.7 | 17.9 |
| Ex.2* | Yes | 0.46 | 378 | 7.3 | 8.4 | 15.1 |
| Ex.3* | Yes | 0.47 | 52 | 15.6 | 19.4 | 24.4 |
| Ex.4 | Yes | 0.41 | 46 | 15.3 | 19.1 | 24.8 |
| Ex.5* | Yes | 0.48 | 36 | 23.5 | 30.3 | 28.9 |
| Ex.6* | Yes | 0.48 | 96 | 20.4 | 23.7 | 16.2 |
| Ex.7* | Yes | 0.46 | 90 | 10.2 | 13.3 | 30.4 |
| C.Ex.1 | Yes | 0.48 | 0 | 8.5 | 15.0 | 76.5 |
| C.Ex.2 | No | 0.42 (fine powder formation) | 105 | 21.9 | 24.5 | 11.9 |
| C.Ex.3 | Yes | - | 90 (*2) | 8.8 | 13.6 | 54.5 |
| C.Ex.4 | Yes | 0.46 | 1.3(*3) | 12.3 | 17.2 | 39.8 |
| C.Ex.5 | Yes | 0.45 | 182(*3) | 23.5 | 29.4 | 25.0 (colored polymer later) |

| | | | | | | |
|---|---|---|---|---|---|---|
| *1: {(3rdData)-(1stData)}/(1stData) *2: Antioxidant was added to polymer *3: Antioxidant was added to polymerization system Ex.: Example, C.Ex.: Comparative Example *: Reference Example, not in accordance with invention | | | | | | |

### (Example 8) (Reference Example - not in accordance with invention)

### (1) Synthesis of catalyst

A catalyst was synthesized in the same manner as in Example 1 (1).

### (2) Prepolymerization

10 ml of a 30% by weight solution of stearyl(3,5-ditertiarybutyl-4-hydroxyphenyl)propionate in heptane as a phenol-based stabilizer and 10 ml of a 30% by weight solution of tris(2,4-ditertiarybutylphenyl)phosphite in heptane as a phosphorus-based stabilizer were mixed in a 50 ml flask and then charged in a similar 1 L flask as in Example 1 (1), followed by stirring for 30 minutes.

The total amount of the above slurry was charged in an agitation-type autoclave of an internal volume of 1.0 L that was sufficiently replaced with nitrogen. When the temperature became stable at 40°C, propylene was supplied at a rate of 10 g/hour to keep the temperature. After 2 hours, the propylene was stopped to supply and the slurry was left for standing for another one hour. After termination of the prepolymerization, residual monomers were purged off and stirring was stopped. The slurry was transferred into a 1 L flask that was sufficiently replaced with nitrogen. The slurry was added with 8.5 ml (6.0 mmol) of a solution of triisobutylaluminum in heptane, stirred at room temperature for 10 minutes and then dried at 40°C under reduced pressure to recover 36.4 g of a prepolymerization catalyst. The prepolymerization catalyst had a mean particle diameter of 61 µm.

### (3) Preservation

The dried catalyst obtained in the above (2) was transferred to a pressure bottle made of Pyrex ® under a nitrogen atmosphere. The bottle was sealed and then stored in a nitrogen -sealed storage box at ordinary temperature for 3 months.

### (4) Polymerization using preserved catalyst

Polymerization was conducted using the catalyst preserved in the above (3) in the same manner as in Example 1 (3). The obtained polymer amounted to 205 g. The polymer BD was 0.48 g/cm³. The results are shown in Table 2.

### (5) Evaluation of stability of polymer

The stability was evaluated in the same manner as in Example 1 (4). The results are shown in Table 3. The MFR was stable.

### (Example 9) (Reference Example - not in accordance with invention)

### (1) Prepolymerization

After preparing a catalyst in the same manner as in Example 1 (1), 5 ml of a 30% by weight solution of tetrakis[methylene-3-(3',5'-ditertiarybutyl-4'-hydroxypheny 1)propionate]methane in heptane as a phenol-based stabilizer and 5 ml of a 30% by weight solution of tris(2,4-ditertiarybutylphenyl)phosphite in heptane as a phosphorus-based stabilizer were mixed in a 50 ml flask and then charged in the above 1 L flask followed by stirring for 30 minutes.

The total amount of the above slurry was charged in an agitation-type autoclave of an internal volume of 1.0 L that was sufficiently replaced with nitrogen. When the temperature became stable at 50°C, propylene was supplied at a rate of 10 g/hour to keep the temperature. After 2 hours, the propylene was stopped to supply and the slurry was left for standing for another one hour. After termination of prepolymerization, residual monomers were purged off and stirring was stopped. The slurry was introduced into a 1 L flask that was sufficiently replaced with nitrogen. The slurry was added with 12.5 ml (8.8 mmol) of a solution of triisobutylaluminum in heptane, stirred at room temperature for 10 minutes and then dried at 40°C under reduced pressure to recover 33.4 g of a prepolymerization catalyst. The prepolymerization catalyst had a mean particle diameter of 58 µm.

### (2) Polymerization

An autoclave equipped with an induction stirrer of an internal volume of 3 L was sufficiently replaced with propylene and then charged with 2.9 ml of a solution of triisobutylaluminum in heptane (140 mg/ml) and 200 ml of hydrogen followed by introduction of 750 g of liquefied propylene, and heated to 65°C. The prepolymerization catalyst obtained in the above (1) was made to a slurry with heptane, of which 116 mg was pressed into the autoclave as a prepolymerization catalyst to start polymerization. The internal temperature of tank was kept at 65°C. After one hour since catalyst introduction, the polymerization was terminated by purging off residual monomers and replacing the gas phase in the autoclave with argon 5 times. The recovered polymer was dried at 40°C for one hour in a vacuum dryer. The obtained polymer amounted to 230 g. The polymer BD was 0.47 g/cm³ and the powder quality was good. The MFR was 12.8 g / 10 min. The content of the phenol-based stabilizer and the content of the phosphorus-based stabilizer were each 26 ppm in the polymer. The results are shown in Table 2.

### (3) Preservation

The dried catalyst obtained in the above (1) was transferred to a pressure bottle made of Pyrex ® under a nitrogen atmosphere. The bottle was sealed and then stored in a nitrogen -sealed storage box at ordinary temperature for 3 months.

### (4) Polymerization using preserved catalyst

Polymerization was conducted using the catalyst preserved in the above (3) in the same manner as in (2). The obtained polymer amounted to 240 g. The polymer BD was 0.48 g/cm³ and the MFR was 16.5 g/10 min. The results are shown in Table 2.

### (Example 10) (Reference Example - not in accordance with invention)

### (1) Preservation

The dried catalyst obtained in Example 9 (1) was transferred to a pressure bottle made of Pyrex ® under a nitrogen atmosphere. The bottle was sealed and then stored in a nitrogen -sealed storage box at ordinary temperature for 6 months.

### (2) Polymerization using preserved catalyst

Polymerization was conducted using the catalyst preserved in the above (1) in the same manner as in Example 9 (2). The obtained polymer amounted to 220 g. The polymer BD was 0.48 g/cm³ and the MFR was 11.3 g/10min. The results are shown in Table 2.

### (Example 11)

### (1) Synthesis of catalyst

A catalyst was synthesized in the same manner as in Example 4 (1).

### (2) Prepolymerization

10 ml of a 30% by weight solution of stearyl(3,5-ditertiarybutyl-4-hydroxyphenyl)propionate in heptane as a phenol-based stabilizer and 10 ml of a 30% by weight solution of tris(2,4-ditertiarybutylphenyl)phosphite in heptane as a phosphorus-based stabilizer were mixed in a 50 ml flask and then charged in a similar 1 L flask as in Example 4 (1), followed by stirring for 30 minutes.

The total amount of the above slurry was charged in an agitation-type autoclave of an internal volume of 1.0 L that was sufficiently replaced with nitrogen. When the temperature became stable at 40°C, propylene was supplied at a rate of 10 g/hour to keep the temperature. After 2 hours, the propylene was stopped to supply and the slurry was left for standing for another one hour. After termination of prepolymerization, residual monomers were purged off and stirring was stopped. The slurry was transferred into a 1 L flask that was sufficiently replaced with nitrogen. The slurry was added with 8.5 ml (6.0 mmol) of a solution of triisobutylaluminum in heptane, stirred at room temperature for 10 minutes and then dried under reduced pressure to recover 37. g of a prepolymerization catalyst. The ratio of polypropylene to the catalyst was 2.1 g/g. The prepolymerization catalyst had a mean particle diameter of 98.3 µm.

### (3) Preservation

The dried catalyst obtained in the above (2) was transferred to a pressure bottle made of Pyrex ® under a nitrogen atmosphere. The bottle was sealed and then stored in a nitrogen -sealed storage box at ordinary temperature for 3 months.

### (4) Polymerization using preserved catalyst

Polymerization was conducted using the catalyst preserved in the above (3) in the same manner as in Example 4 (3). The obtained polymer amounted to 270 g. The polymer BD was 0.41 g/cm³. The results are shown in Table 2.

### (5) Evaluation of stability of polymer

The stability was evaluated in the same manner as in Example 4 (4). The results are shown in Table 3. The MFR was stable.

### (Example 12) (Reference Example - not in accordance with invention)

### (1) Synthesis of catalyst

A catalyst was synthesized in the same manner as in Example 5 (1).

### (2) Prepolymerization

5 ml of a 30% by weight solution of stearyl(3,5-ditertiarybutyl-4-hydroxyphenyl)propionate in heptane as a phenol-based stabilizer and 5 ml of a 30% by weight solution of tris(2,4-ditertiarybutylphenyl)phosphite in heptane as a phosphorus-based stabilizer were mixed and stirred in a 20 ml flask.

An agitation-type autoclave of an internal volume of 1.0 L that was sufficiently replaced with nitrogen was charged with 500 ml of hexane, 1 mmol of triethylaluminum, a slurry of stabilizers similar as in Example 5 (1) and 2 g (1.0 mmol in terms of titanium atom) of a titanium-containing catalyst and then supplied with 10.5 g of propylene at 20°C for 120 minutes to conduct prepolymerization. After termination of the reaction, unreacted propylene was purged off and stirring was stopped. The slurry was introduced into a 1 L flask that was sufficiently replaced with nitrogen. The slurry was added with 1.7 ml (1.2 mmol) of a solution of triisobutylaluminum in heptane, stirred at room temperature for 10 minutes and then dried at 40°C under reduced pressure to recover 6.3 g of a prepolymerization catalyst. The ratio of polypropylene to the catalyst was 2.1 g/g. The prepolymerization catalyst had a mean particle diameter of 67.3 µm.

### (3) Preservation

The dried catalyst obtained in the above (2) was transferred to a pressure bottle made of Pyrex ® under a nitrogen atmosphere. The bottle was sealed and then stored in a nitrogen -sealed storage box at ordinary temperature for 3 months.

### (4) Polymerization using preserved catalyst

Polymerization was conducted using the catalyst preserved in the above (3) in the same manner as in Example 5 (3). The obtained polymer amounted to 140 g. The polymer BD was 0.48 g/cm³. The results are shown in Table 2.

### (5) Evaluation of stability of polymer

The stability was evaluated in the same manner as in Example 5 (3). The results are shown in Table 3. The MFR was stable.

### (Reference Example)

### (1) Prepolymerization

Synthesis of a catalyst was conducted in the same manner as in Example 8 (1). Prepolymerization was then conducted in the same manner as in Example 8 (2) except that triisobutylaluminum was not added when the catalyst was dried.

10 ml of a 30% by weight solution of stearyl(3,5-ditertiarybutyl-4-hydroxyphenyl)propionate in heptane as a phenol-based stabilizer and 10 ml of a 30% by weight solution of tris(2,4-ditertiarybutylphenyl)phosphite in heptane as a phosphorus-based stabilizer were mixed in a 50 ml flask and then charged in the above 1 L flask, followed by stirring for 30 minutes.

The total amount of the above slurry was charged in an agitation-type autoclave of an internal volume of 1.0 L that was sufficiently replaced with nitrogen. When the temperature became stable at 40°C, propylene was supplied at a rate of 10 g/hour to keep the temperature. After 2 hours, the propylene was stopped to supply and the slurry was left for standing for another one hour. After termination of prepolymerization, residual monomers were purged off and stirring was stopped. The slurry was transferred into a 1 L flask that was sufficiently replaced with nitrogen. The slurry was dried at 40°C under reduced pressure to recover 36.1 g of a prepolymerization catalyst. The prepolymerization catalyst had a mean particle diameter of 56 µm.

### (2) Polymerization

An autoclave equipped with an induction stirrer of an internal volume of 3 L was sufficiently replaced with propylene and then charged with 2.9 ml of a solution of triisobutylaluminum in heptane (140 mg/ml) and 200 ml of hydrogen followed by introduction of 750 g of liquefied propylene, and heated to 65°C. The prepolymerization catalyst obtained in the above (1) was made to a slurry with heptane, of which 145 mg was pressed into the autoclave as a prepolymerization catalyst to start polymerization. The internal temperature of tank was kept at 65°C. After one hour since catalyst introduction, the polymerization was terminated by purging off residual monomers and replacing the gas phase in the autoclave with argon 5 times. The recovered polymer was dried at 40°C for one hour in a vacuum dryer. The obtained polymer amounted to 200 g. The polymer BD was 0.42 g/cm³ and fine powders were formed. The content of the phenol-based stabilizer and the content of the phosphorus-based stabilizer were each 39 ppm in the polymer. The results are shown in Table 3.

### (3) Evaluation of stability of polymer

The stability of the obtained polymer was evaluated by measurement of MFR repeated 3 times with a melt indexer. The measured MFR of the obtained polymer without an additional stabilizer was 10.6 g/10 min. The obtained strand was introduced again into the melt indexer and MFR was measured, which was repeated 2 times. The third measured MFR was 12.2 g/10 min, which showed good stability. The results are shown in Table 3.

### (4) Preservation

The dried catalyst obtained in the above (1) was transferred to a pressure bottle made of Pyrex® under a nitrogen atmosphere. The bottle was sealed and then stored in a nitrogen -sealed storage box at ordinary temperature for 3 month.

### (5) Polymerization using preserved catalyst

Polymerization was conducted using the catalyst preserved in the above (4) in the same manner as in (2). The obtained polymer amounted to 68 g. The polymer BD was 0.30 g/cm³. The results are shown in Table 2.

### (6) Evaluation of stability of polymer

The stability was evaluated in the same manner as in above (3). As the result, the 1st measured MFR was 35.2 g/10 min, whereas the 3rd measured MFR was 50.9 g/10 min. The MFR strand colored yellow. The results are shown in Table 3.

**(Table 2)**

| | Al When dried | Al Amount | | Preser. Period (month) | Yield (g) | Activity (g-PP/ g-cat/hr) | MFR (g/ 10min) | Polymer BD (g/cm³) |
|---|---|---|---|---|---|---|---|---|
| | | (ml) | (mmol) | | | | | |
| Ex.8* | TIBA | 8.5 | 6.0 | I.after | 210 | 5,030 | 18.4 | 0.48 |
| | | | | 3 | 205 | 4,910 | 19.5 | 0.48 |
| Ex.9* | TIBA | 12.5 | 8.8 | I.after | 230 | 6,300 | 12.8 | 0.47 |
| | | | | 3 | 240 | 6,580 | 16.5 | 0.48 |
| Ex.10* | TIBA | 12.5 | 8.8 | 6 | 220 | 6,030 | 11.3 | 0.48 |
| Ex.11 | TIBA | 8.5 | 6.0 | I.after | 259 | 13,020 | 15.3 | 0.41 |
| | | | | 3 | 270 | 13,570 | 21.0 | 0.41 |
| Ex.12* | TIBA | 1.7 | 1.2 | I.after | 150 | 29,640 | 23.5 | 0.48 |
| | | | | 3 | 140 | 27,660 | 24.8 | 0.47 |
| R.Ex. | - | 0.0 | 0.0 | I.after | 200 | 5,480 | 10.6 | 0.42 |
| | | | | 3 | 68 | 1,860 | 35.2 | 0.30 |

| | | | | | | | | |
|---|---|---|---|---|---|---|---|---|
| I.after: Immediately after Preser. Period: Preservation Period Ex.: Example, R.Ex.: Reference Example *: Reference Example, not in accordance with invention | | | | | | | | |

**(Table 3)**

| | Preservation | Content of Antioxidant (ppm) | MFR (g/10min) | | MFR Change Ratio (%) *1 |
|---|---|---|---|---|---|
| | | | 1st Data | 3rd Data | |
| Example 8* | Immediately after | 90 | 18.4 | 21.7 | 17.9 |
| | After 3 mos pre. | 90 | 19.5 | 23.5 | 20.5 |
| Example 11 | Immediately after | 46 | 15.3 | 19.1 | 24.8 |
| | After 3 mos pre. | 46 | 21 | 26.5 | 26.2 |
| Example 12* | Immediately after | 36 | 23.5 | 30.3 | 28.9 |
| | After 3 mos pre. | 36 | 24.8 | 31.8 | 28.2 |
| Refer. Example | Immediately after | 78 | 10.6 | 12.2 | 15.1 |
| | After 3 mos pre. | 78 | 35.2 | 50.9 | 44.6 |

| | | | | | |
|---|---|---|---|---|---|
| *1: {(3rd Data)-(1st Data)}/(1st Data) Refer. Example: Reference Example After 3 mos pre.: After 3 months preservation *: Reference Example, not in accordance with invention | | | | | |

When Examples 1 to 7 are compared with Comparative Examples 1 to 5, the results in Table 1 show that in Comparative Examples where the specific conditions of the present invention that an olefin polymerization catalyst is produced by prepolymerization in the presence of the component [I] (solid catalyst for olefin polymerization having an mean particle diameter of 10 to 200 µm), the component [III] (antioxidant for resins) and the component [III] (olefin), are not satisfied, problems such as a rise of the MFR of the polymer produced by using the produced olefin polymerization catalyst, degradation of the polymer caused by poor stability, formation of fine powders in the polymer powder, poor-quality powder and colored polymer are encountered, whereas the polymer produced by using the olefin polymerization catalyst of Examples gives a polyolefin resin having high stability and polymer powders of a large particle diameter and good quality. Consequently, it can be understood that a polyolefin resin having high stability and good powder quality can be produced in fewer steps in the present invention by using the olefin polymerization catalyst produced by prepolymerization in the presence of the component [I] (solid catalyst for olefin polymerization having a mean particle diameter of 10 to 200 µm), the component [II] (antioxidant for resins) and the component [III] (olefin).

Also, when Examples 8 to 12 are compared with Reference Example, the results in Table 2 and Table 3 show that compared with in Reference Example where the specific conditions of the present invention that an olefin polymerization catalyst is produced by prepolymerization in the presence of the component [I] (solid catalyst for olefin polymerization having a mean particle diameter of 10 to 200 µm), the component [II] (antioxidant for resins), the component [III] (olefin) and the component [IV], are not satisfied, the polymer produced by using the olefin polymerization catalyst of Examples 8 to 12 gives a better polyolefin resin having higher stability, even though the olefin polymerization catalyst after 3 months preservation is used. Consequently, it can be understood that a polyolefin resin having high stability and good powder quality can be produced in fewer steps in the present invention by using the olefin polymerization catalyst produced by prepolymerization in the presence of the component [I] (solid catalyst for olefin polymerization having a mean particle diameter of 10 to 200 µm), the component [II] (antioxidant for resins), the component [III] (olefin) and the component [IV] even though the catalyst has been preserved for a long period.

The prepolymerization of the present invention can provide an olefin polymerization catalyst that can provide a highly stabilized polyolefin resin of a large particle size. As an antioxidant for resins contained in the catalyst is uniformly dispersed inside the polymer, it can be expected to reduce the amounts of various antioxidants and weatherability improving agents to be blended in molding. In addition, the catalyst provides a polymer having a large particle size and good powder quality. As the antioxidant for resins is contained in the produced polymer, a granulating step for introducing a stabilizer can be omitted, which is industrially of immense value.

The olefin polymerization catalyst and the method for preserving the olefin polymerization catalyst of the present invention provide the olefin polymerization catalyst with a long storage life and can stably produce a highly stabilized polyolefin resin having a large particle size and good powder quality. In the conventional methods for olefin polymerization where an antioxidant is blended in a melt-kneading step after polymerization for stabilization, a large amount of energy is ineffectively consumed and an amount of a stabilizer more than necessary is required to be added to prevent insufficient dispersion of the antioxidant. Considering such the disadvantages of the conventional technologies, the present invention has industrially immense value where a melt-kneading step to consume a large amount of energy or a substitute addition step therefor is not necessary and a polyolefin resin effectively added with a small amount of an antioxidant can be stably produced.

## Claims

1. A process for production of an olefin polymerization catalyst comprising a prepolymerization in the presence of the following components [I] to [IV]:
Component [I]: a solid catalyst for olefin polymerization having a mean particle diameter of 10 to 200 µm
Component [II]: an antioxidant for resins comprising a phenol-based antioxidant and/or a phosphorus-based antioxidant
Component [III]: an olefin
Component [IV]: an organoaluminum compound,
**characterized in that**
the component [II] is added in a step for prepolymerization by contacting the component [I] and the component [III],
the component [I] is obtained by contacting the following component [A], component [B] and component [C]:
Component [A] : a transition metal compound of Groups 4 to 6 of the Periodic Table
Component [B]: a phyllosilicate having ion exchange ability
Component [C]: an organoaluminum compound, and
the component [I] contains the following component [A'] and component [B']:
Component [A']: a component obtained by contacting the component [A] and the component [C]
Component [B']: a component obtained by contacting the component [B] and the component [C] followed by washing.

2. The process for production of an olefin polymerization catalyst according to claim 1 **characterized in that** the ratio of the component [III] to the component [I] is 0.01 to 100 based on mass.

3. The process for production of an olefin polymerization catalyst according to claim 1 or 2 **characterized in that** the component [I] comprises a metallocene catalyst.

4. The process for production of the olefin polymerization catalyst according to claim 1 **characterized in that** the component [IV] is added immediately after prepolymerization by contacting the components [I] to [III].

5. The process for production of the olefin polymerization catalyst according to claim 1 **characterized in that** the component [IV] is added at the same time as or next to the component [II] immediately after prepolymerization by contacting the component [I] and the component [III].

## Patentansprüche

1. Verfahren zur Herstellung eines Olefinpolymerisationskatalysators, welches eine Vorpolymerisation in Gegenwart der folgenden Komponenten [I] bis [IV] umfasst:
Komponente [I]: ein fester Katalysator für die Olefinpolymerisation mit einem mittleren Teilchendurchmesser von 10 bis 200 µm
Komponente [11]: ein Antioxidationsmittel für Harze, welches ein Phenol-basierten Antioxidationsmittel und/oder ein Phosphor-basiertes Antioxidationsmittel umfasst
Komponente [III]: ein Olefin
Komponente [IV]: eine Organoaluminiumverbindung,
**dadurch gekennzeichnet, dass**
die Komponente [II] in einem Schritt zur Vorpolymerisation durch Kontaktieren der Komponente [I] und der Komponente [III] hinzugefügt wird,
die Komponente [I] durch Kontaktieren der folgenden Komponente [A], Komponente [B] und Komponente [C] erhalten wird:
Komponente [A]: eine Übergangsmetallverbindung der Gruppen 4 bis 6 des Periodensystems
Komponente [B]: ein Phyllosilikat mit Ionenaustauschfähigkeit
Komponente [C]: eine Organoaluminiumverbindung, und
die Komponente [I] die folgende Komponente [A'] und Komponente [B'] enthält:
Komponente [A']: eine Komponente, die durch Kontaktieren der Komponente [A] und der Komponente [C] erhalten wird
Komponente [B']: eine Komponente, die durch Kontaktieren der Komponente [B] und der Komponente [C], gefolgt von Waschen, erhalten wird.

2. Verfahren zur Herstellung eines Olefinpolymerisationskatalysators gemäß Anspruch 1, **dadurch gekennzeichnet, dass** das Massenverhältnis der Komponente [III] zu der Komponente [I] 0,01 bis 100 beträgt.

3. Verfahren zur Herstellung eines Olefinpolymerisationskatalysators gemäß Anspruch 1 oder 2, **dadurch gekennzeichnet, dass** die Komponente [I] einen Metallocenkatalysator umfasst.

4. Verfahren zur Herstellung eines Olefinpolymerisationskatalysators gemäß Anspruch 1, **dadurch gekennzeichnet, dass** die Komponente [IV] unmittelbar nach der Vorpolymerisation durch Kontaktieren der Komponenten [I] bis [III] zugegeben wird.

5. Verfahren zur Herstellung eines Olefinpolymerisationskatalysators gemäß Anspruch 1, **dadurch gekennzeichnet, dass** die Komponente [IV] zur gleichen Zeit oder als nächstes zu der Komponente [II] unmittelbar nach der Vorpolymerisation durch Kontaktieren der Komponente [I] und der Komponente [III] zugegeben wird.

## Revendications

1. Processus de production d'un catalyseur de polymérisation d'oléfines comprenant une prépolymérisation en présence des composants [I] à [IV] suivants :
un composant [I] : un catalyseur solide pour la polymérisation d'oléfines ayant un diamètre moyen de particules allant de 10 à 200 µm
un composant [II] : un antioxydant pour des résines comprenant un antioxydant à base de phénol et/ou un antioxydant à base de phosphore
un composant [III] : une oléfine
un composant [IV] : un composé d'organoaluminium,
**caractérisé en ce que**
le composant [II] est ajouté dans une étape pour la prépolymérisation par mise en contact du composant [I] et du composant [III],
le composant [I] est obtenu par mise en contact du composant [A], du composant [B] et du composant [C] suivants :
un composant [A] : un composé de métal de transition des groupes 4 à 6 du tableau périodique
un composant [B] : un phyllosilicate ayant une capacité d'échange d'ions
un composant [C] : un composé d'organoaluminium, et
le composant [I] contient le composant [A'] et le composant [B'] suivants :
un composant [A'] : un composant obtenu par mise en contact du composant [A] et du composant [C]
un composant [B'] : un composant obtenu par mise en contact du composant [B] et du composant [C] suivie d'un lavage.

2. Processus de production d'un catalyseur de polymérisation d'oléfines selon la revendication 1, **caractérisé en ce que** le rapport du composant [III] sur le composant [I] est de 0,01 à 100 sur la base de la masse.

3. Processus de production d'un catalyseur de polymérisation d'oléfines selon la revendication 1 ou 2, **caractérisé en ce que** le composant [1] comprend un catalyseur à base de métallocène.

4. Processus de production du catalyseur de polymérisation d'oléfines selon la revendication 1, **caractérisé en ce que** le composant [IV] est ajouté immédiatement après une prépolymérisation par mise en contact des composants [I] à [III].

5. Processus de production du catalyseur de polymérisation d'oléfines selon la revendication 1, **caractérisé en ce que** le composant [IV] est ajouté en même temps que le composant [II] ou après celui-ci immédiatement après une prépolymérisation par mise en contact du composant [I] et du composant [III].
